# EUROPEAN PATENT APPLICATION

(11) **EP 3 992 916 A1**
(43) Date of publication of application: **04.05.2022**
(21) Application number: 20834759.1
(22) Date of filing: 10.06.2020
(51) Int. Cl.: G06T 13/80, H04N 5/76, H04N 5/92, G06F 16/583

(54) **IMAGE FILE CREATION DEVICE, IMAGE FILE CREATION METHOD, AND PROGRAM**

(30) Priority: 01.07.2019 JP 2019123136; 30.09.2019 JP 2019180721; 07.01.2020 JP 2020000990
(71) Applicant: Canon Kabushiki Kaisha, Tokyo 146-8501 (JP)
(72) Inventor: FUKADA, Masanori, Tokyo 146-8501 (JP); IMAO, Eiji, Tokyo 146-8501 (JP); DENOUAL, Franck, Tokyo 146-8501 (JP); MAZE, Frederic, Tokyo 146-8501 (JP)
(74) Representative: Canon Europe Limited
(86) International application number: PCT/JP2020/022819
(87) International publication number: WO 2021/002165

(57) **Abstract**

An image file creation apparatus for creating an image file according to a predetermined image file format of a structure including an image data area that stores images and a metadata area that stores metadata as information concerning the images, decides a plurality of images to be continuously displayed, from the images stored in the image data area; and creates identification information for each of the plurality of images and information of a position in the image data area where the image corresponding to the identification information is stored and stores the created information in the metadata area, and also stores, in the metadata area, information indicating a display order of the plurality of images and information indicating a display time of each of the plurality of images.

## Description

### TECHNICAL FIELD

The present invention relates to a technique for storing one or more image data in an image file.

### BACKGROUND ART

In MPEG (Moving Pictures Experts Group), standardization for storing one still image, a plurality of still images, or an image sequence (a burst of still images or the like) in one file is performed. This standard is called HEIF (High Efficiency Image File Format), and allows replacement, edit, and display of an image and an image sequence. HEIF is a storage format extended based on a tool defined in ISOBMFF (ISO Base Media File Format). HEIF has been standardized under the name of "Image File Format" in ISO/IEC23008-12 (Part 12). HEIF defines a model structure including metadata, and defines a method of associating an image with metadata and the structure of metadata in a specific format. PTL 1 describes a technique for storing a derived image in an image file complying with HEIF.

On the other hand, in recent years, an image generation apparatus such as a camera or a smartphone having an image generation function have various functions, and can generate not only a shooting date/time, an image size, and image quality but also various kinds of information such as information at the time of shooting and metadata of captured image data. For example, information for identifying an object or a scene at the time of shooting, various kinds of shooting setting information, and the like are generated together with image data. This information concerning the image data can be stored as metadata in a HEIF file together with the image data. There is also provided an application having a function of displaying a plurality of images while automatically, sequentially switching the images. In many applications, this function is called a slide show. In HEIF, it is also possible to create an image file intended to display a plurality of image data in a slide show by storing the image data.

### CITATION LIST

### PATENT LITERATURE

PTL 1: US-2016-371265

### SUMMARY OF INVENTION

### TECHNICAL PROBLEM

In the HEIF specification, when storing temporally continuous still images (for example, consecutive photographs obtained by burst shooting by a camera, or the like), it is possible to store the images as an image sequence. In a HEIF file including an image sequence, it is necessary to define temporally continuous still images as a video track in the HEIF file, similar to a moving image, so that an application for displaying images can perform continuous display processing. Therefore, creation processing of a HEIF file storing settings of a slide show for sequentially, automatically displaying arbitrary images by assigning display times (periods) can be complicated.

The present invention has been made in consideration of the above problem, and provides a technique for efficiently performing processing of storing, in an image file, information necessary to continuously display a plurality of images.

### SOLUTION TO PROBLEM

As a means for solving the above problem, an image file creation apparatus according to the present invention has the following arrangement. That is, there is provided an image file creation apparatus for creating an image file according to a predetermined image file format of a structure including an image data area that stores images and a metadata area that stores metadata as information concerning the images, comprising decision means for deciding a plurality of images to be continuously displayed, from the images stored in the image data area, and metadata processing means for creating identification information for each of the plurality of images and information of a position in the image data area where the image corresponding to the identification information is stored and storing the created information in the metadata area, and also storing, in the metadata area, information indicating a display order of the plurality of images and information indicating a display time of each of the plurality of images.

### ADVANTAGEOUS EFFECTS OF INVENTION

It is possible to efficiently perform processing of storing, in an image file, information necessary to continuously display a plurality of images.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a block diagram showing the arrangement of an image file creation apparatus;
Fig. 2 is a flowchart of image file creation processing;
Fig. 3 is a flowchart of metadata creation processing of a slide show according to the first embodiment;
Fig. 4 is a view showing an example of the data format of description information of a derived image according to the first embodiment;
Fig. 5 is a view showing another example of the data format of the description information of the derived image according to the first embodiment;
Fig. 6 is a view showing the structure of a HEIF file created according to the first embodiment;
Fig. 7 is a view showing an example of the HEIF file output according to the first embodiment;
Fig. 8 is a flowchart of metadata creation processing of a slide show according to the second embodiment;
Fig. 9 is a view showing an example of the data format of SlideshowEntityToGroupBox;
Fig. 10 is a view showing the data format of ImageDurationProperty;
Fig. 11 is a view showing the data format of ImageLocationProperty;
Fig. 12 is a view showing an example of the data format of TransitionEffectProperty;
Fig. 13 is a view showing the data format of SlideShowProperty;
Fig. 14 is a view showing the structure of a HEIF file created according to the second embodiment;
Fig. 15 is a view showing an example of the HEIF file output according to the second embodiment;
Fig. 16 is a view showing the data format of PrimaryItemBox complying with the HEIF standard;
Fig. 17 is a view showing an example of the data format of Primary ItemB ox;
Fig. 18 is a view showing another example of the data format of Primary ItemB ox;
Fig. 19 is a view showing an example of a HEIF file output according to the third embodiment;
Fig. 20 is a flowchart of slide show reproduction processing of an image file;
Fig. 21 is a view showing another example of the data format of SlideshowEntityToGroupBox;
Fig. 22 is a view showing an example of the data format of description information of an ImageOverlay derived image;
Fig. 23 is a view showing the data format of SlideShowTimingProperty;
Fig. 24 is a view showing another example of the data format of TransitionEffectProperty;
Fig. 25 is a view showing the data format of ImageScalingProperty;
Fig. 26 is a view showing another example of the data format of ImageScalingProperty;
Fig. 27 is a view showing the data format of ImageSpatialExtentProperty;
Fig. 28 is a view showing another example of the data format of TransitionEffectProperty;
Fig. 29 is a view showing an example of the data format of WipeTransitionEffectProperty;
Fig. 30 is a view showing an example of the data format of ZoomTransitionEffectProperty; and
Fig. 31 is a view showing an example of the data format of FadeInTransitionEffectProperty.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

### <First Embodiment>

### [Hardware Arrangement]

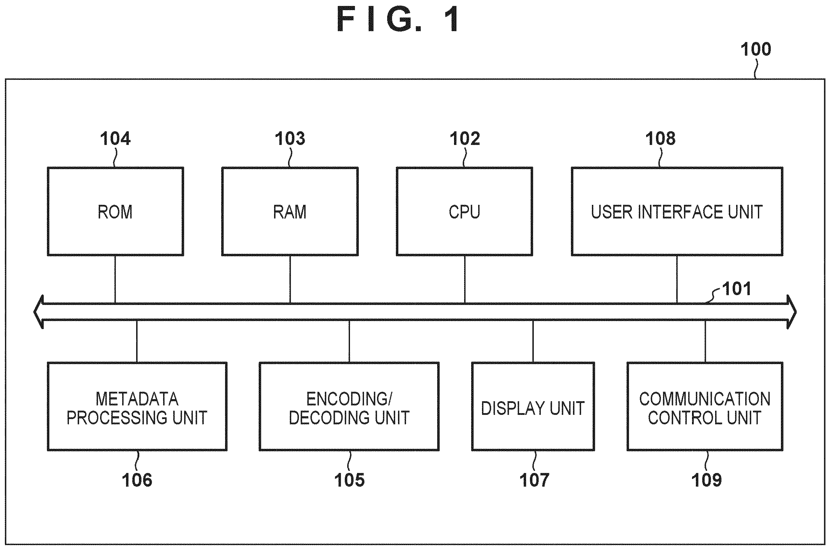

Fig. 1 shows an example of the arrangement of an image file creation apparatus 100. In the image file creation apparatus 100, a CPU 102, a RAM 103 as a temporary storage device at the time of execution of a system program, and a ROM 104 as a nonvolatile storage device storing the system program are connected to a system bus 101. The system program or an application program is loaded from the ROM 104 into the RAM 103, and executed by the CPU 102. Furthermore, an encoding/decoding unit 105, a metadata processing unit 106, a display unit 107, a user interface unit 108, and a communication control unit 109 are connected to the system bus 101. The system bus 101 transfers data between these blocks. The RAM 103 includes an output buffer, and is used as a data buffer for image file creation processing or as the output destination of data stored in an image file.

The encoding/decoding unit 105 is a video codec of a moving image or a still image, which complies with H.265 (HEVC), H.264 (AVC), AV1, JPEG, or the like, and executes encoding and decoding processing of data of the still image or the moving image. The metadata processing unit 106 acquires data (encoded data) encoded by the encoding/decoding unit 105, and generates an image file complying with a predetermined file format (for example, HEIF). More specifically, the metadata processing unit 106 executes analysis processing of metadata stored in a still or moving image file to generate information concerning a still or moving image and acquire parameter information concerning the encoded data. Then, the metadata processing unit 106 executes processing of storing the information as metadata in the file together with the encoded data. Furthermore, the metadata processing unit 106 performs metadata processing at the time of reproduction of the still or moving image by analyzing the metadata stored in the file.

The display unit 107 is intended to serve as a screen for displaying an application of the image file creation apparatus 100, and is, for example, a liquid crystal display device. The display unit 107 may include a screen touch sensor so as to allow the user to operate the application by a GUI (Graphic User Interface). The display unit 107 may reproduce a file for confirming the generated file. The user interface unit 108 is an interface for accepting a user operation (input) on the image file creation apparatus 100, and is formed by, for example, a physical operation interface such as a button or a switch.

The communication control unit 109 is a network interface for transmitting/receiving a transmission frame by performing connection to a network. The communication control unit 109 corresponds to, for example, the Ethernet^{®} PHY and MAC (transmission medium control processing) of a wired LAN. Alternatively, if the image file creation apparatus 100 is connectable to a wireless LAN, the communication control unit 109 includes a controller for executing wireless LAN control complying with IEEE802.11a/b/g/n/ac/ax or the like, an RF circuit, and an antenna.

### [Image File Creation Processing]

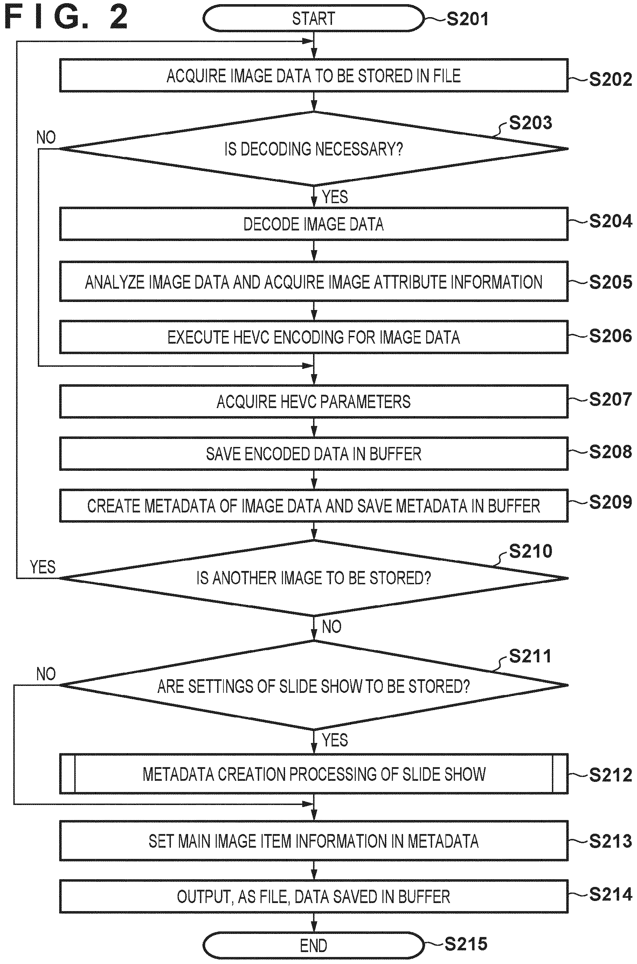

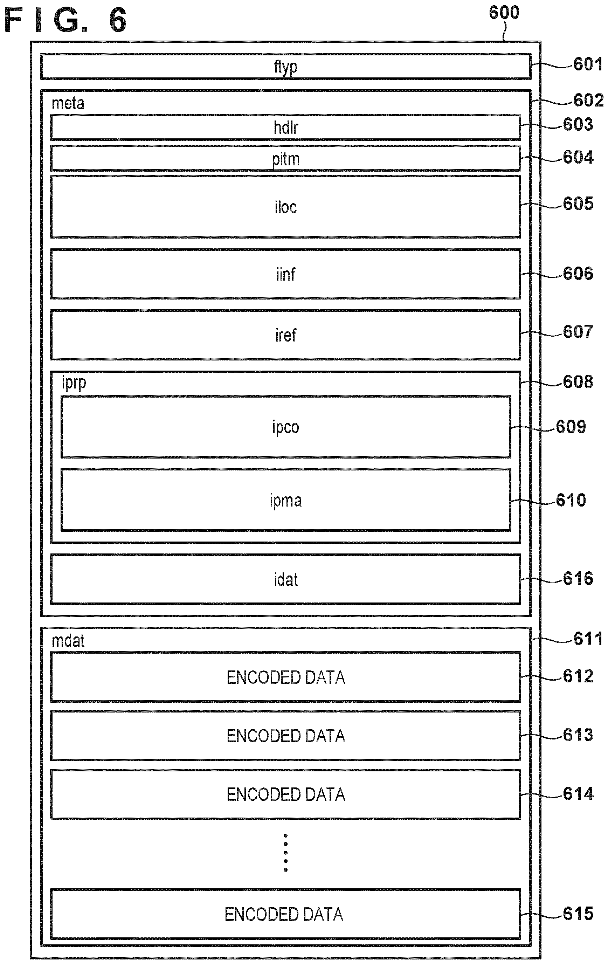

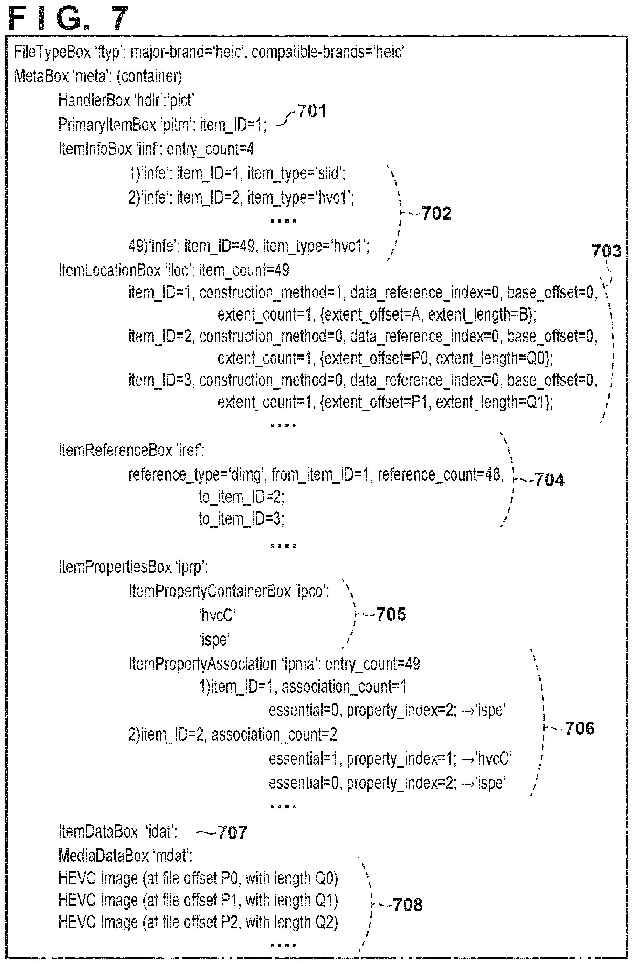

The procedure of image file creation processing of the image file creation apparatus 100 will be described next with reference to Figs. 2, 6, and 7. Fig. 2 is a flowchart of the image file creation processing. More specifically, Fig. 2 shows the procedure of processing of creating a file that stores one or more still images in accordance with the HEIF file format. Each step of the flowchart shown in Fig. 2 indicates processing executed by one of software by the CPU 102, the encoding/decoding unit 105, and the metadata processing unit 106. Note that in the following description, a description "CPU 102" indicates software processing executed by the CPU 102. Fig. 6 shows the structure of a HEIF file 600 as an example of a HEIF file created by the image file creation apparatus 100 according to this embodiment. The HEIF file 600 includes a metadata storage area 602 (MetaBox (meta)) (metadata area) and an encoded data storage area 611 (MediaDataBox (mdat)) (image data area). Fig. 7 is a view showing an example of the HEIF file output according to this embodiment. Fig. 7 shows an example of storing one or more still images and a derived image forming a slide show in accordance with the HEIF file format.

The image file creation processing starts from step S201. In step S202, the CPU 102 acquires (selects), from image data stored in the RAM 103 or the ROM 104, image data to be stored in a HEIF file. This acquisition processing may be performed based on information preset for the image file creation apparatus 100, a user operation via the user interface unit 108, or the like. The image data may be a HEIF file storing one still image or another still image file of JPEG or the like. Alternatively, as long as the image data is still image data, it need not be stored as a file. Next, in step S203, the CPU 102 determines whether the image data acquired in step S202 needs to be decoded (that is, the image data is a HEIF file). If the acquired image data need not be decoded (the acquired image data is a HEIF file) (NO in step S203), the process advances to step S207; otherwise (if the acquired image data is a file other than a HEIF file) (YES in step S203), the process advances to step S204.

Processes in steps S204 to S206 are executed by the encoding/decoding unit 105. In step S204, the encoding/decoding unit 105 decodes the acquired image data. Next, in step S205, the encoding/decoding unit 105 analyzes the decoded image data to acquire image attribute information. The image attribute information includes, for example, the width and height of the image, the number of color components, and a bit length. In step S206, the encoding/decoding unit 105 executes HEVC encoding for the decoded image data. Next, in step S207, the metadata processing unit 106 acquires a parameter set necessary for decoding of the encoded data generated in step S206. More specifically, the parameter set is a video parameter set (VPS), a sequence parameter set (SPS), a picture parameter set (PPS), or the like. However, if the process directly advances from step S203 to step S207, the image data acquired in step S202 is a HEIF file, and thus the metadata processing unit 106 extracts the HEVC parameter set from the HEIF file and acquires it. In step S208, the encoding/decoding unit 105 transfers the encoded data to the output buffer of the RAM 103 and saves it. The encoded data is one of encoded data stored in the encoded data storage area 611. Note that in the following description, the image data/encoded data saved (stored in the HEIF file) in step S208 will collectively be referred to as image data.

Step S209 is processing of creating metadata concerning the image data stored in the HEIF file, and is executed by the metadata processing unit 106. The metadata created in step S209 includes image item information and image attribute information. The image item information is entry data stored in an area 606 (ItemInfoBox (iinf)) of Fig. 6. The entry data in iinf sets an item ID (identification information) for identifying the image data in the file and an item type indicating an HEVC encoded image. On the other hand, the image attribute information is data stored in an area 608 (ItemPropertiesBox (iprp)) of Fig. 6. The image attribute information created in step S209 includes entry data stored in an area 609 (ItemPropertyContainerBox (ipco)) of Fig. 6 and entry data stored in an area 610 (ItemPropertyAssociationBox (ipma)) of Fig. 6. In ipco, attribute information such as entry data indicating the HEVC parameter set acquired in step S207 and entry data indicating the width and height of the selected image are stored. In ipma, entry data indicating the association between the item ID and the entry data in ipco is created. Data of the image attribute information created in step S209 is saved, in the output buffer of the RAM 103, as part of metadata stored in the metadata storage area 602 (MetaDataBox (meta)) of Fig. 6.

When the process advances to step S210 after step S209, the CPU 201 confirms whether to store another image data in the HEIF file being created. If there is another image to be stored, the process returns to step S202; otherwise, the process advances to step S211. If the process returns from step S210 to step S202, the CPU 201 acquires (selects) another image data, and executes the above-described processes in steps S203 to S209.

In step S211, the CPU 102 determines whether to store settings of a slide show (continuous display processing of the images) in the HEIF file being created. This determination processing may be performed based on the information preset for the image file creation apparatus 100, a user operation via the user interface unit 108, or the like. If the settings of the slide show are stored in the HEIF file (YES in step S211), metadata creation processing of the slide show in step S212 is executed. Note that the processing of step S212 will be described later.

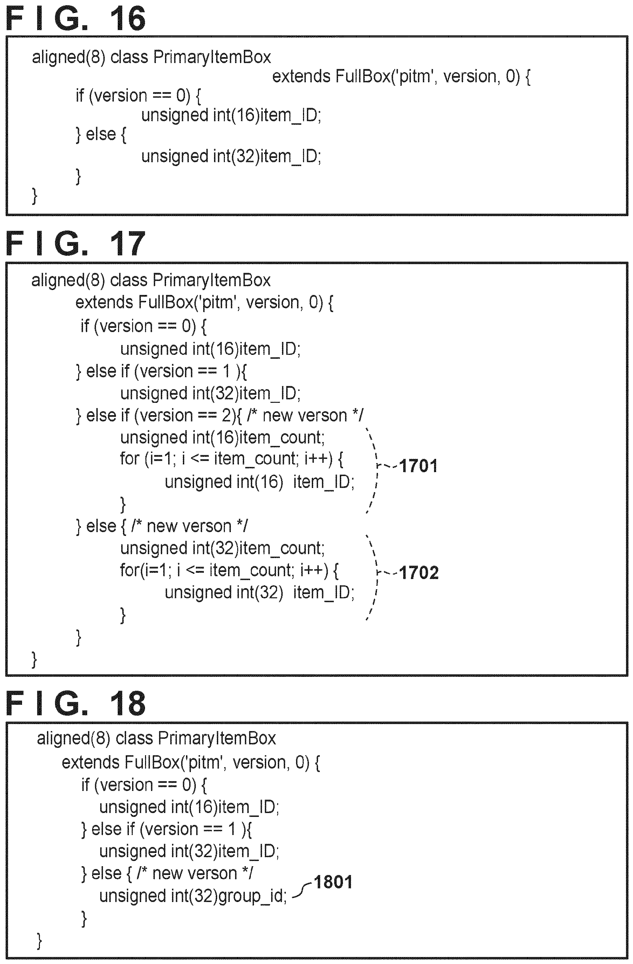

In step S213, the metadata processing unit 106 decides a representative image from the images stored in the HEIF file, and creates metadata of main image item information (sets main image item information in metadata). The representative image decision processing may be performed based on the information preset for the image file creation apparatus 100, a user operation via the user interface unit 108, or the like. The metadata created in step S213 is stored in an area 604 (PrimaryItemBox (pitm)) of Fig. 6. Fig. 16 shows the data format of PrimaryItemBox in the HEIF standard. As shown in Fig. 16, the data format of pitm simply designates the item ID of the representative image. The metadata created in step S213 is saved in the output buffer of the RAM 103.

The last processing in step S214 is executed by the metadata processing unit 106. In step S214, the metadata processing unit 106 creates data to be stored in an area 601 (FileTypeBox (ftyp)) and an area 603 (HandlerBox (hdlr)) of Fig. 6. Note that as shown in Fig. 7, the handler type of MetaDataBox (meta) designated in hdlr can be "pict". Then, the metadata processing unit 106 combines the created metadata of ftyp and hdlr, the metadata stored in the metadata storage area 602 (MetaBox (meta)) saved in the RAM 103, and the encoded data stored in the encoded data storage area 611 (MediaDataBox (mdat)). The metadata processing unit 106 forms data of the structure shown in Fig. 6 on the RAM 103, and completes the data as the HEIF file, thereby outputting it. After that, the process advances to step S215, thereby ending the processing sequence (S215). The CPU 102 can write and save data of the created HEIF file from the RAM 103 into the ROM 104.

Note that if the metadata creation processing of the slide show in step S212 is skipped (NO in step S211), an area 607 (ItemReferenceBox (iref)) of Fig. 6 may not be generated and not be included in the metadata of the HEIF file. However, if, for example, the stored image data include image data relevant to each other like a shot image and its thumbnail image, the metadata processing unit 106 creates, in the processing of step S209, entry data of iref indicating association between the image data. Thus, the metadata of the HEIF file finally created can include iref.

Examples of the values (data) stored in the internal structure of the HEIF file in accordance with the sequence described above will be described with reference to Fig. 7. In PrimaryItemBox (pitm) (corresponding to the area 604) indicated by a description 701, 1 is stored as item_ID. ItemInfoBox (iinf) (corresponding to the area 606) indicated by a description 702 indicates information representing the kind of each image item identified by item_ID. An image item having item_ID of 1 is "slid", and indicates a derived image forming the slide show. Each image item having item_ID of 2 or more is "hvc1", and indicates an HEVC encoded image. ItemLocationBox (iloc) (corresponding to an area 605) indicated by a description 703 indicates the storage position of each image data bit stream in the file. The image item having item_ID of 1 indicates construction method of 1, which represents the existence of data in ItemDataBox (idat) (corresponding to an area 616) indicated by a description 707. With respect to other images, it is possible to specify a position in MediaDataBox (corresponding to the encoded data storage area 611) indicated by a description 708, at which the data exists. ItemReferenceBox (iref) (corresponding to the area 607) indicated by a description 704 is an area indicating the reference relationship between the image items. In this example, reference_type is "dimg" which indicates a derived image forming the slide show, that is, a derived image for referring to a plurality of images to be displayed in the slide show. Furthermore, the description 704 indicates that each image item having item_ID of 2 or more is referred to from item_ID of 1 as a derived image item. In ItemPropertyContainerBox (ipco) (corresponding to the area 609) in ItemPropertiesBox (iprp) (corresponding to the area 608) indicated by a description 705, ItemProperty representing the attribute information of the image is stored. hvcC indicates an HEVC encoding parameter, and ispe indicates attribute information representing the size of the image. A description 706 indicates ItemPropertyAssociationBox (ipma) (corresponding to the area 610) representing the association between each image item and attribute information. The respective image items are sequentially associated with the attribute information in ipco.

### [Metadata Creation Processing of Slide Show]

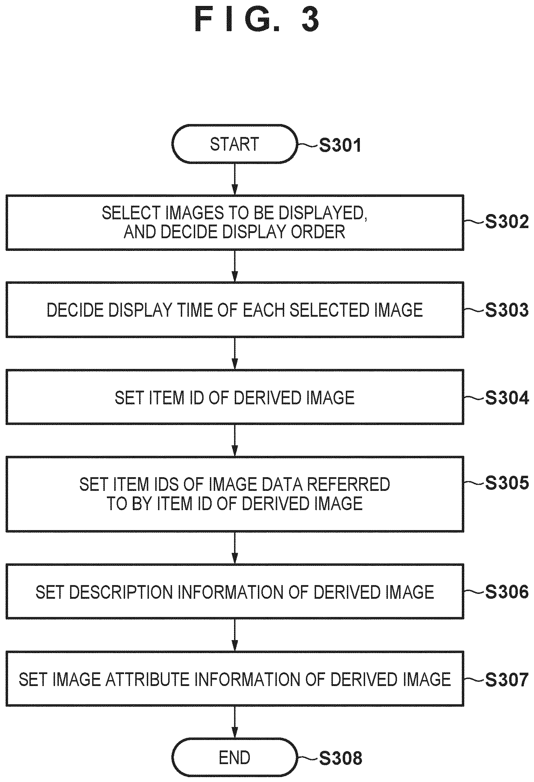

The metadata creation processing of the slide show in step S212 of Fig. 2 will be described next with reference to Figs. 3, 4, 5, and 6. In this embodiment, images forming a slide show are stored as a derived image in a HEIF file. Fig. 3 shows the flowchart of the metadata creation processing according to this embodiment. This processing starts from step S301. First, in steps S302 and S303, the CPU 102 selects, from the image data stored in the HEIF file, one or more image data to be displayed in the slide show, and decides a display order. Next, the CPU 102 decides the display time (period) of each selected image.

The display time (period) may be constant for all the images or different for each image. A value need not be designated at the time of file creation, and an arbitrary value may be decided at the time of reproduction. The selection and decision processing in steps S302 and S303 may be performed based on the information preset for the image file creation apparatus 100, a user operation via the user interface unit 108, or the like.

Subsequent processes in steps S304 to S307 are executed by the metadata processing unit 106. In step S304, the metadata processing unit 106 creates image item information to set the item ID of the derived image forming the slide show. That is, similar to step S209 of Fig. 2 described above, the metadata processing unit 106 creates entry data to be stored in the area 606 (ItemInfoBox (iinf)) of Fig. 6. In this example, the metadata processing unit 106 designates, as the item ID of entry data, an ID that does not overlap the item IDs of the image data stored in the HEIF file, and designates, as the item type, "slid" indicating the derived image forming the slide show (see the description 702 in Fig. 7).

In step S305, the metadata processing unit 106 creates image reference information for designating the images to be displayed in the slide show. The image reference information is created as entry data to be stored in the area 607 (ItemReferenceBox (iref)) of Fig. 6. This entry data is assigned with a type of "dimg" representing the derived image, and the item IDs of the image data referred to by the item ID of the derived image are designated in a list format. The item IDs of the image data as reference destinations are designated in a list format in the display order decided in step S302.

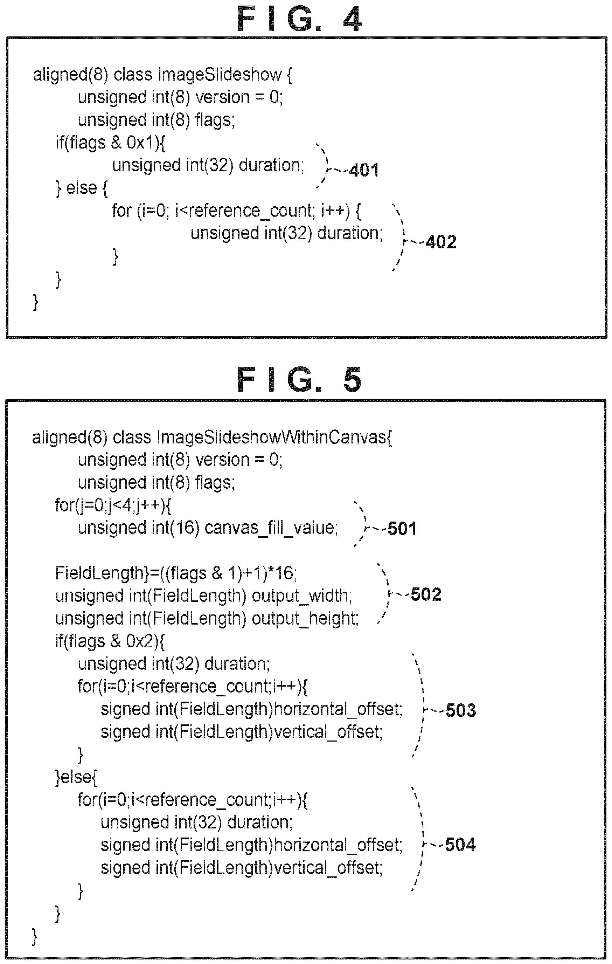

In step S306, the metadata processing unit 106 sets description information of the derived image forming the slide show. This description information is data stored in the area 616 (ItemDataBox (idat)) of Fig. 6. Fig. 4 shows an example of the data format of the description information of the derived image of the slide show. The description information (ImageSlideshow) designates the display time (period) of each image to be displayed in the slide show. In the example shown in Fig. 4, if the display time (period) is constant for the images, that is, flags&1 is 1, only one duration parameter is designated, as indicated by a description 401. Alternatively, if flags& 1 is 0, duration parameters are designated in the display order in a list of duration parameters for designating the display times (periods) for the respective image data, as indicated by a description 402. The duration parameter has a numerical value indicating the time during which the corresponding image item is displayed. As a unit of time set as the display time (period), sec or msec is assumed. The present invention, however, is not limited to this, and any unit that can designate the time is used. Alternatively, a relative time parameter used by the reproduction device (that is, the display unit 107) to decide the display time (period) may be used. Furthermore, the data format shown in Fig. 4 may include, for example, a parameter for designating a unit such as time_unit. The parameter for designating the unit may be configured to be effective in accordance with the value of version or flags. The designation of the parameter can designate the time unit of the duration parameter. If, for example, 10 is designated in the duration parameter, 10 sec is set when a value indicating sec is designated in time_unit, and 10 msec is set when a value indicating msec is designated in time_unit. Other methods capable of uniquely identifying µsec, min, or another time unit may be used. Note that if no display time (period) is designated at the time of file creation, information indicating, by designating a value such as 0, that an arbitrary time (period) is designated at the time of file reproduction may be stored.

In step S307, the metadata processing unit 106 sets the image attribute information of the derived image forming the slide show. An example of this image attribute information is information indicating the width/height of a screen on which the slide show is displayed. If the size of each image designated for the slide show is different from the size of the derived image, the image displayed in the slide show may be enlarged or reduced and displayed, or only a partial image falling within the size of the screen may be displayed. If the size of the screen is larger, attribute information for designating display of a margin portion may be described. However, the image attribute information of the derived image is not always necessary and need not be set.

The format of the description information of the derived image forming the slide show may be a format shown in Fig. 5. Fig. 5 shows another example of the data format of the description information of the derived image of the slide show. The description information (ImageSlideshowWithinCnvas) shown in Fig. 5 has a data format that can designate a canvas (an image region when displaying the slide show on the display unit 107 (an image region of a reconstructed image in which an input image is arranged)) when displaying the slide show. A canvas_fill_value parameter indicated by a description 501 represents a pixel value per channel used when a pixel of the input image is not at a specific pixel position. The pixel value is designated as an RGBA value (each of R, G, B, and A corresponds to a loop counter j equal to 0, 1, 2, or 3). The RGB value is in the sRGB color space defined in IEC61996-2-1. The A value is a linear opacity value ranging from 0 (fully transparent) to 65535 (fully opaque). An output_width parameter and an output_height parameter indicated by a description 502 respectively designate the width and height of the reconstructed image in which the input image is arranged. If flags& 1 is 0, the output width parameter and the output height parameter have values each represented by 16 bits. On the other hand, if flags& 1 is 1, the output_width parameter and the output height parameter have values each represented by 32 bits. A reference_count parameter indicated by a description 503 is acquired from ItemTypeReferenceBox (the description 704 shown in Fig. 7) of the type "dimg" in which the item is identified by the from_item_ID field. A horizontal_offset parameter and a vertical_offset parameter indicated by the description 503 designate an offset from the top left corner of the canvas, with which the input image is arranged. A pixel position with a negative offset value is not included in the reconstructed image. A horizontal pixel position equal to or more than the output width parameter is not included in the reconstructed image. A vertical pixel position equal to or more than the output height parameter is not included in the reconstructed image. If flags&2 is 1, the common duration parameter is designated, similar to the description 401 shown in Fig. 4. If flags&2 is 0, as indicated by a description 504, the duration parameters are designated in the display order in the list of duration parameters for individually designating the display times (periods) for the respective image data. The duration parameter has a numerical value indicating the time during which the corresponding image item is displayed. As a unit of time set as the display time (period), sec or msec is assumed. The present invention, however, is not limited to this, and any unit that can designate the time is used. Alternatively, a relative time parameter used by the reproduction device to decide the display time (period) may be used. Furthermore, similar to Fig. 4, the data format may include a parameter for designating a unit such as time_unit. The parameter for designating the unit may be configured to be effective in accordance with the value of version or flags. The designation of the parameter can designate the time unit of the duration parameter. As a designable value, a method capable of uniquely identifying min, sec, msec, µsec, or another time unit is possible. Note that if no display time (period) is designated at the time of file creation, information indicating, by designating a value such as 0, that an arbitrary time (period) is designated at the time of file reproduction may be stored.

If the image attribute information is set in step S307, the metadata processing unit 106 creates entry data to be stored in the area 609 (ItemPropertyContainerBox (ipco)) of Fig. 6, similar to step S209 described above. Furthermore, the metadata processing unit 106 creates entry data to be stored in the area 610 (ItemPropertyAssociationBox (ipma)) of Fig. 6. Then, the process advances to step S308, thereby ending the processing sequence.

Note that the metadata created in the processes in steps S304 to S307 is written, as part of metadata stored in the area 602 (MetaDataBox (meta)) of Fig. 6, at a position where each data is to be stored in the output buffer of the RAM 103. Furthermore, the item ID of the derived image set in step S213 may be designated as the item ID of the representative image in the processing of step S213 described above.

### [Reproduction Processing of Slide Show]

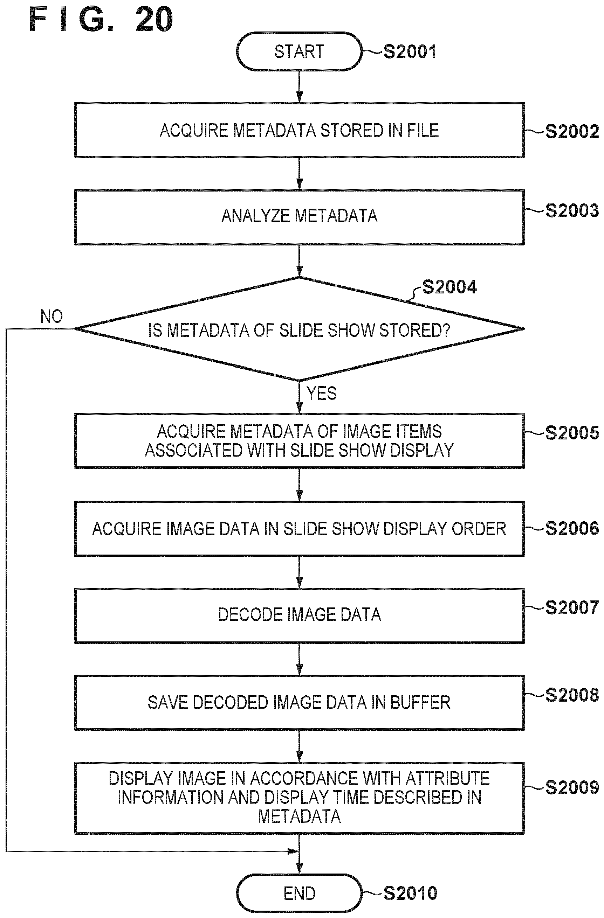

The reproduction processing of the slide show stored in the image file format will be described next with reference to Fig. 20. Fig. 20 is a flowchart of the slide show reproduction processing of the image file. More specifically, Fig. 20 shows the procedure of processing of reproducing a file storing one or more still images as a slide show in accordance with the HEIF file format. Each step of the flowchart shown in Fig. 20 indicates processing executed by one of software by the CPU 102, the encoding/decoding unit 105, and the metadata processing unit 106. Note that in the following description, a description "CPU 102" indicates software processing executed by the CPU 102.

The slide show reproduction processing in image file reproduction starts from step S2001. Then, in step S2002, the CPU 102 acquires the metadata stored in the metadata storage area 602 (MetaBox (meta) from the HEIF file stored in the RAM 103 or the ROM 104. Next, the CPU 102 analyzes, in step S2003, the metadata acquired in step S2002, and determines, as a result of the analysis, in step S2004, whether metadata concerning the slide show is stored in the metadata. If the metadata concerning the slide show is stored in the metadata (YES in step S2004), the process advances to step S2005; otherwise (NO in step S2004), the process advances to step S2010. If the process advances to step S2010, the image file creation apparatus 100 executes reproduction processing of a HEIF file other than the slide show.

In step S2005, the metadata processing unit 106 acquires metadata of image items associated with slide show display. More specifically, the metadata processing unit 106 acquires item information of each image item referred to from the derived image forming the slide show, attribute information of the image, and position information in the image file. In step S2006, the encoding/decoding unit 105 acquires image data in the slide show display order. Each image data is acquired by specifying a position in the encoded data storage area 611 (MediaDataBox (mdat)) based on the position information in the image file stored in the metadata. The encoding/decoding unit 105 decodes, in step S2007, the image data to be displayed, and temporarily saves, in step S2008, the decoded image data in the buffer. Subsequently, in step S2009, the CPU 102 displays the image on the display unit 107 in accordance with attribute information and the display time (period) described in the metadata. Note that if information indicating designation of an arbitrary time (period) at the time of file reproduction, such as 0, is stored, the display time (period) is decided by the processing of the reproduction device. By repeatedly executing the processes in steps S2005 to S2009, the images stored in the HEIF file are sequentially displayed on the display unit 107. Note that although not shown in this embodiment, the CPU 102 may control the display unit 107 to repeatedly display the images from the first image or end the slide show display after the end of display of all the images stored as the slide show.

According to this embodiment, by forming and storing, as a derived image, a plurality of images stored in the HEIF file, it is possible to store images forming a slide show by a derived image. Thus, processing of saving, as a file intended for slide show display, a HEIF file storing a set of a plurality of still images becomes easy. Furthermore, even if images of different sizes are handled, it is possible to prevent an event in which a display size changes every time each image is displayed, by defining information of a canvas in description information of the derived image. It is possible to designate a display position by holding, as a parameter, in the description information of the derived image, canvas position information at the time of image display. It is also possible to switch, in the slide show, the image to be preferentially displayed, by adapting the derived image item as a main image item. Note that this embodiment has explained the arrangement of storing, in the HEIF file, metadata for implementing a slide show using a derived image. A different arrangement may be adopted as long as a slide show is formed using a derived image.

### <Second Embodiment>

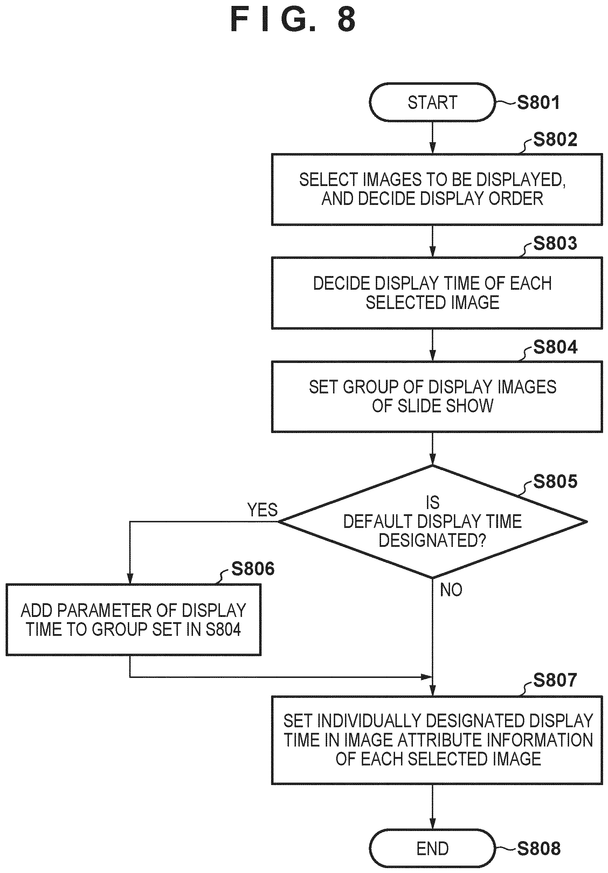

An image file creation apparatus according to the second embodiment has the same arrangement as that described with reference to Fig. 1 in the first embodiment. The sequences of the image file creation processing shown in Fig. 2 and the slide show reproduction processing of the image file shown in Fig. 20 are similarly applicable to this embodiment. However, metadata creation processing (S212) of a slide show in Fig. 2 is different from the first embodiment. Therefore, this embodiment will mainly describe the processing in step S212 with reference to Figs. 8, 9, 10, 11, 12, 13, 14, 15, 21, 22, 23, 24, 25, 26, 27, 28, 29, 30, and 31.

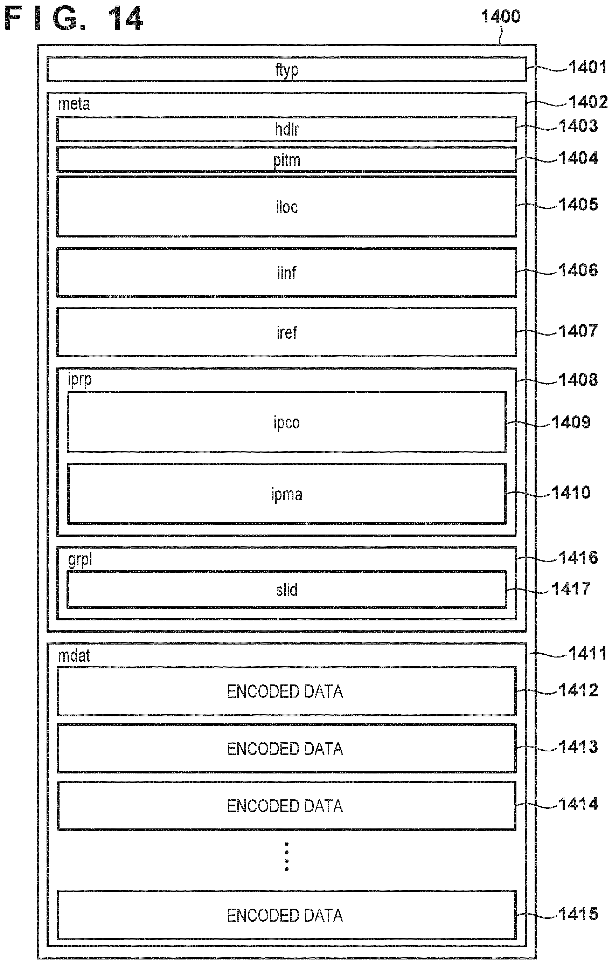

Fig. 8 is a flowchart illustrating the procedure of the metadata creation processing of the slide show according to this embodiment. Fig. 14 shows the structure of a HEIF file 1400 as an example of a HEIF file created by an image file creation apparatus 100 according to this embodiment. The HEIF file 1400 includes a metadata storage area 1402 (MetaBox (meta)) and an encoded data storage area 1411 (MediaDataBox (mdat)).

Referring to Fig. 8, the metadata creation processing of the slide show starts from step S801. First, in steps S802 and S803, a CPU 102 selects images to be displayed in a slide show, decides a display order, and decides the display time (period) of each selected image, similar to steps S302 and S303 of Fig. 3. As a unit of time set as the display time (period), sec or msec is assumed. The present invention, however, is not limited to this, and any unit that can designate the time is used. Alternatively, a relative time parameter used by a reproduction device to decide the display time (period) may be used. An arbitrary time (period) may be designated at the time of file reproduction without designating the display time (period) at the time of file creation.

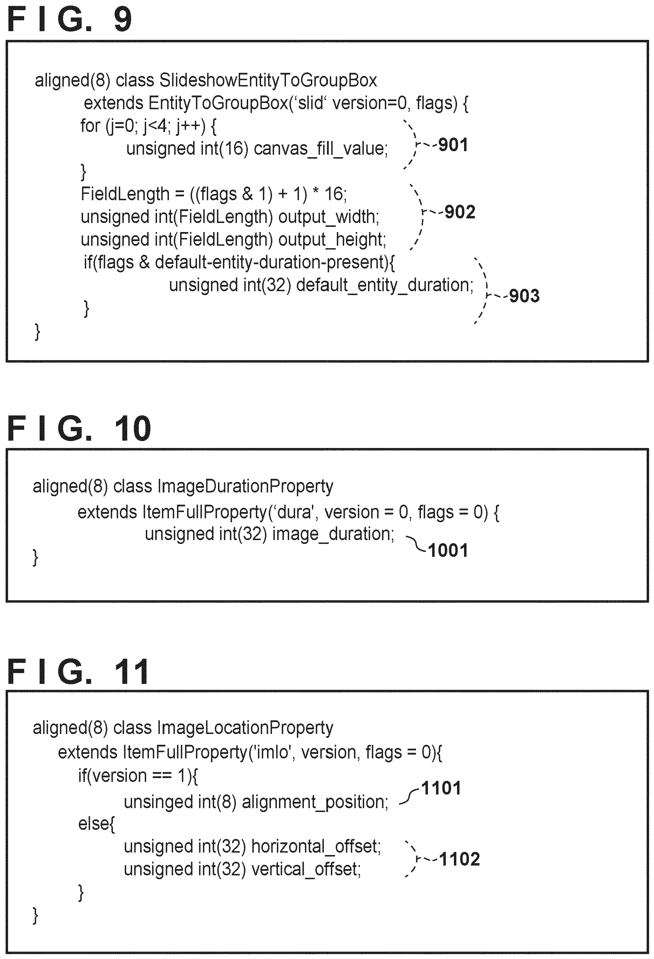

Next, in step S804, a metadata processing unit 106 sets a group of display images of the slide show. More specifically, the metadata processing unit 106 creates information (group information) for grouping the images to be displayed in the slide show. This group information is metadata to be stored in an area 1416 (GroupsListBox (grpl)) of Fig. 14. In HEIF, group information of items such as image data is stored in grpl. The group information is assigned with a group ID as group identification information and a group type, and is identified in the HEIF file. In this embodiment, in step S804, the metadata processing unit 106 creates slide show group information (SlideshowEntityToGroupBox) as group information. Fig. 9 shows the data format of SlideshowEntityToGroupBox. The metadata processing unit 106 creates data of the data format shown in Fig. 9, and stores it in grpl (see an area 1417 in Fig. 14). SlideshowEntityToGroupBox is a box for identifying the group of entities intended for slide show display of a set of a plurality of images in a large canvas. The group type of SlideshowEntityToGroupBox is "slid", and indicates the group of items used for the slide show. Since the data format shown in Fig. 9 is obtained by extending EntityToGroupBox, group_id for storing the group ID and num_entries_in_group indicating the number of items included in the group are additionally designated. As the item ID, the item ID of each selected image to be displayed in the slide show is designated in the display order.

Note that since SlideshowEntityToGroupBox is obtained by extending EntityToGroupBox, a track can also be stored as a group but this embodiment targets only image items and prohibits storage of a track and storage of items other than images. However, in another form, a structure including a track may be adopted. If, for example, a track ID is included, the number of track IDs may be limited to one, and a parameter concerning the display time (period) of each sample may be designated in the track. Assume that a switching (transition) effect (to be described later) can be designated for each sample by a sample group. Similarly, in other forms, the number of track IDs is limited to one, and the display period of each sample is designated in the track. Then, there is provided a method that can designate a canvas and a switching (transition) effect (to be described later) using a derived track for which standardization is in progress as "MPEG-B Part 16 Derived visual tracks in the ISO base Media file format".

As another method, a method in which no limitation is imposed on entities stored in SlideshowEntityToGroupBox is considered. Alternatively, a method that can store one of an image item ID and a track ID is considered. In this case, for example, there are a method of designating a common display time (period) with respect to the display time (period) and a method of designating a track based on a track and an item based on image attribute information.

Referring to Fig. 9, descriptions 901 and 902 are the same as the descriptions 501 and 502 of Fig. 5 described in the first embodiment, and are thus not explained. A portion of a description 903 is optional, and is designated when setting the default display time (period) of the slide show. If the default display time (period) is designated, the display time (period) is designated in a default_entity_duration parameter. default_entity-duration-present is a value of 0x000002. If flags&default entity-duration-present is 1, the default_entity_duration parameter as the default display time (period) is designated. If flags&default entity-duration-present is 0, the display time (period) is individually designated for each image data, and is thus designated using an image attribute. The default_entity_duration parameter has a numerical value indicating the time (period) during which the corresponding image item is displayed. As a unit of time set as the display time (period), sec or msec is assumed. The present invention, however, is not limited to this, and any unit that can designate the time is used. Alternatively, a relative time parameter used by a reproduction device to decide the display time (period) may be used. Furthermore, the data format may include a parameter for designating a unit such as time_unit. The parameter for designating the unit may be configured to be effective in accordance with the value of version or flags. The designation of the parameter can designate the time unit of the default_entity_duration parameter. As a designable value, a method capable of uniquely identifying min, sec, msec, µsec, or another time unit is possible. Note that if no display time (period) is designated at the time of file creation, information indicating, by designating a value such as 0, that an arbitrary time (period) is designated at the time of file reproduction may be designated.

Note that even if flags&default entity-duration-present is 1 and the dafault_entity_duration parameter is designated, when the display time (period) is designated in the image attribute information, the display time (period) of the image attribute information is prioritized. This embodiment adopts the method of deciding whether to optionally designate the default display time (period) by flags. However, the default entity_duration parameter may be set instead of optionally setting the default display time. In this case, for example, the default entity_duration parameter designated in SlideshowEntityToGroupBox may be used as a default value, and may be handled as the display time (period) used when the attribute information is not individually designated for the image item. Furthermore, even if a flag is additionally provided and the display time (period) is designated in attribute information using the flag indicating a value commonly used for all the image items, the common display time (period) may be used.

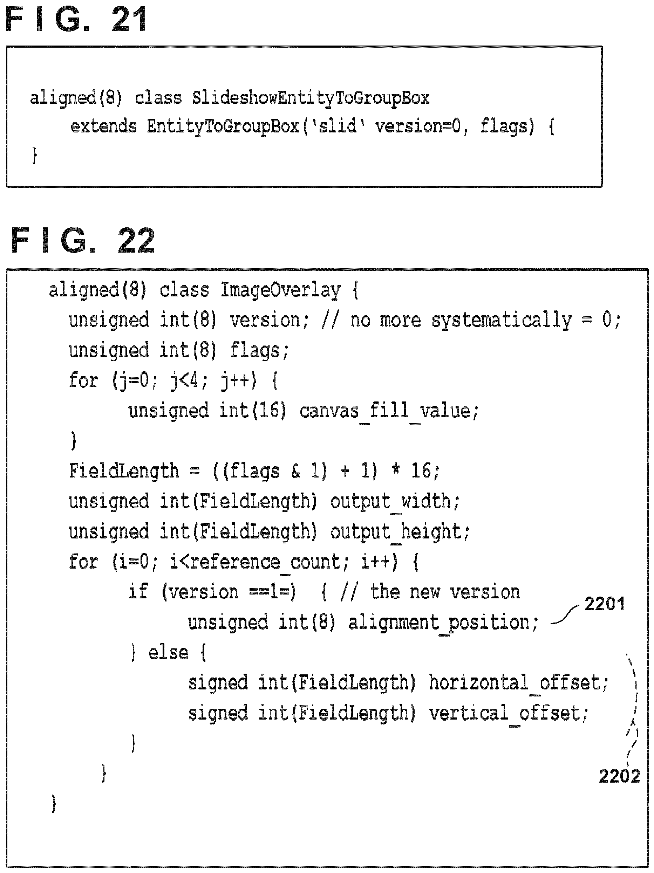

As the data format of SlideshowEntityToGroupBox, a structure shown in Fig. 21 may be used. In this case, the metadata processing unit 106 creates data of the data format shown in Fig. 9, and stores it in grpl (see the area 1417 in Fig. 14). SlideshowEntityToGroupBox is a box for identifying the group of entities intended for slide show display of a set of a plurality of images. The group type of SlideshowEntityToGroupBox is "slid", and indicates the group of items used for the slide show. Since the data format shown in Fig. 21 is obtained by extending EntityToGroupBox, group_id for storing the group ID and num_entries_in_group indicating the number of items included in the group are additionally designated. As the item ID, the item ID of each selected image to be displayed in the slide show is designated in the display order. In the structure shown in Fig. 21, SlideshowEntityToGroupBox is used to identify the group of images to be displayed in the slide show and the display order. In the structure shown in Fig. 21, there is no special parameter for SlideshowEntityToGroupBox. In this case, each parameter is designated using the entry data (group ID) stored in ItemPropertyContainerBox (ipco) and ItemPropertyAssociationBox (ipma) in ItemPropertiesBox (iprp) (to be described later). Note that even in the structure shown in Fig. 9, a property designated for the group may be associated. Assume that the entities stored in SlidshowEntityToGroupBox store the item IDs of encoded image items and a derived image item, which can be displayed. As the derived image, for example, a defined identity (iden), a grid (grid) image, or an overlay (iovl) image is designated, thereby making it possible to display the derived image as an advanced slide show on the canvas. Alternatively, it may be possible to store another group ID. For example, it is considered to display, at the same timing, images grouped as a shooting group. For example, it is considered to store, as a group, images shot for HDR (High Dynamic Range) rendering or images shot to be displayed as a panoramic photograph, and designates the ID of the group as an entity of SlideshowEntityToGroup. This allows display of an advanced slide show.

On the other hand, a structure that stores data by limiting to images of specific item_type may be adopted. For example, in the structure of EntityToGroupBox shown in Fig. 21, no information of the canvas is held. Therefore, it is considered to use an overlay image defined as a derived image. If the canvas is necessary, iovl indicating overlay is designated in item_type of an entity that can be stored. Then, it is considered that all items stored in EntityToGroupBox are overlay derived images. In this case, the same output width and output height parameters are desirably set for all the overlay derived images stored in SlideshowEntityToGroup. Furthermore, it is also considered to designate only encoded images when designating encoded images. In this case, a common ispe image property is desirably associated with each image. On the other hand, without setting this limitation, a property for designating the whole size of slide show display may be associated with the group ID in Entity ToGroupBox. This assumes a property of an extended structure of the ispe property. That is, the ispe property can be applied to the entity group. Alternatively, the size of the image designated in the first entity in SlideshowEntityToGroupBox may be used as the whole size of slide show display. In addition, the image sizes of the entities stored in SlideshowEntityToGroupBox may be limited to be the same. If an image of a size different from the display size or the limitation is designated, the image may be enlarged/reduced or cropped to fall within the display size and then displayed, and if the image is small, the remaining region may be displayed by additionally designating default canvas information or predefining a specific canvas. However, it may be configured to switch the whole size of slide show display for each displayed image.

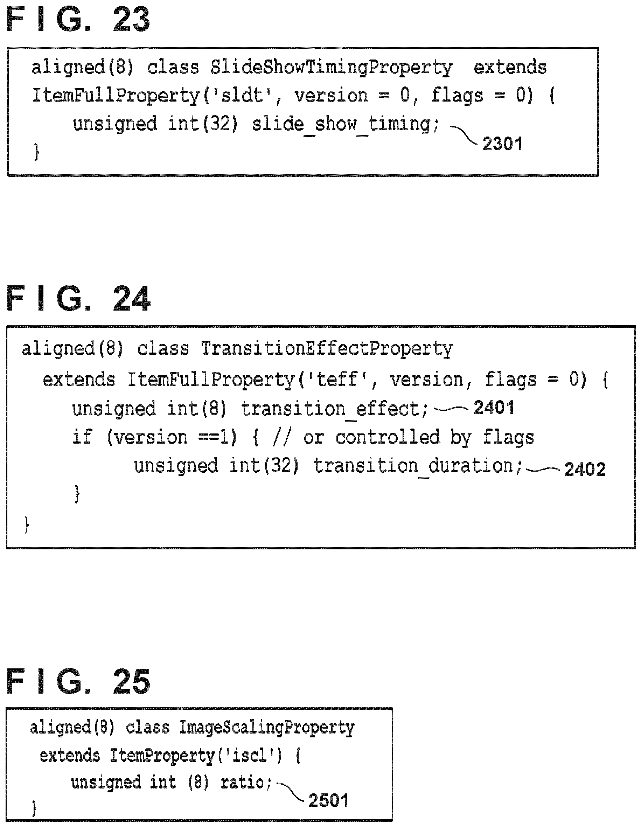

ImageScalingProperty shown in Fig. 25 has a data format including a ratio parameter of a description 2501, and is a transformative item property for scaling (enlarging/reducing) the display size of the image. This property allows the image size to be enlarged/reduced while maintaining the aspect ratio. The ratio parameter of the description 2501 is an 8-bit integer and represents a ratio of 16, 8, 4, 2, 1/2, 1/4, 1/8, or 1/16 as a multiple of 2. The higher 4 bits indicate an operation for enlargement. If the most significant bit is 1, this indicates a ratio of 16, if the second bit from the most significant bit is 1, this indicates a ratio of 8, if the third bit from the most significant bit is 1, this indicates a ratio of 4, and if the fourth bit from the most significant bit is 1, this indicates a ratio of 2. The lower 4 bits indicate an operation for reduction. If the least significant bit is 1, this indicates a ratio of 1/16, the second bit from the least significant bit is 1, this indicates a ratio of 1/8, if the third bit from the least significant bit is 1, this indicates a ratio of 1/4, and if the fourth bit from the least significant bit is 1, this indicates a ratio of 1/2. Note that this embodiment adopts the above structure as the data format of ImageScaling Property. However, more detailed designation may be allowed. This property may be represented by a modification of a clap property. That is, it is possible to individually designate a numerator and a denominator. Furthermore, instead of designating a ratio, a target size may be designated to perform enlargement/reduction. In this case, for example, it is possible to perform enlargement/reduction by designating one of the width and the height while maintaining the aspect ratio. On the other hand, enlargement/reduction may be performed by designating both the width and the height without maintaining the aspect ratio. If the aspect ratio is not maintained, a method of designating the longitudinal magnification and lateral magnification may be adopted. These designation methods may be defined in combination, and the designation method may be switched using flags or the like to allow arbitrary designation.

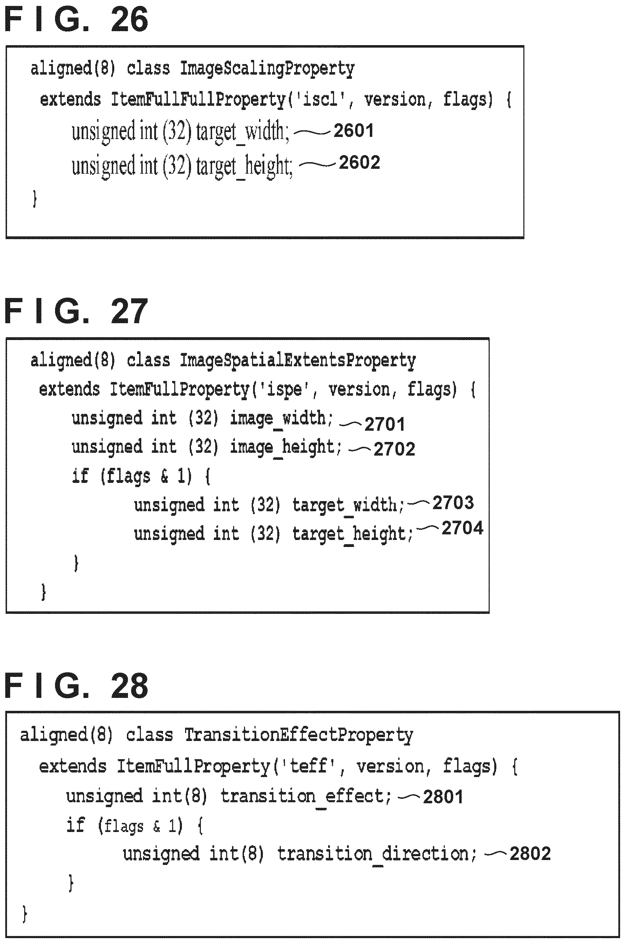

ImageScalingProperty shown in Fig. 26 has a data format including a target width parameter of a description 2601 and a target height parameter of a description 2602, and is a transformative item property for performing enlargement/reduction by designating the display target size of the image. This property allows enlargement/reduction by directly designating the width and the height on a pixel basis. The target width parameter of the description 2601 designates, on a pixel basis, the width of the image after the size change. The target height parameter of the description 2602 designates, on a pixel basis, the height of the image after the size change. Note that enlargement/reduction may be performed while maintaining the aspect ratio by designating only one of the sizes and designating a value such as 0 as the other size so as not to designate one of the sizes after the size change. A data format in which only one or both of the sizes is effective in accordance with the value of version or flags may be adopted.

ImageScalingProperty may be defined by extending defined ImageSpatialExtentsProperty. For example, a method of changing the meaning of ImageSpatialExtentsProeprty without changing the defined data structure is considered. In this case, extension is performed so as to designate, as a transformative property, ImageSpatialExtentsProeprty which is a descriptive item property. If ImageSpatialExtentsProeprty is handled as a transformative property, by associating the property with an image item defined as an identity (iden) derived image item defined as a derived image, it is possible to identify whether the property is associated with the image item by intending the descriptive property or the transformative property. More specifically, if ImageSpatialExtentsProeprty associated with the iden derived image item is different from ImageSpatialExtentsProeprty associated with the image item as a derivation source, it is interpreted that the enlargement/reduction operation of the image size needs to be applied. In this case, as the image_width parameter, the width of the image after the size change is designated on a pixel basis. Similarly, as the image_height parameter, the height of the image after the size change is designated on a pixel basis. Note that a restriction that the image size cannot be changed directly without defining a derived image item is imposed.

On the other hand, ImageSpatialExtentsProeprty shown in Fig. 27 is an extension with a change of the data structure. This is a data format including an image_width parameter of a description 2701, an image_height parameter of a description 2702, a target width parameter of a description 2703, and a target_height parameter of a description 2704. This data format is a descriptive item property and a transformative item property for description of image size information and enlargement/reduction by designating the reconstruction size and display target size of encoded image data. In ImageSpatialExtentsProeprty, the width and height of the associated image item are described. All the image items are associated with one item property of this type. The image width parameter of the description 2701 and the image height parameter of the description 2702 indicate, on a pixel basis, the original sizes of the reconstructed image of the associated image item before conversion. If flags& 1 is 1, the reconstructed image is resized from pixel sizes designated by the image width parameter and the image height parameter to pixel sizes designated by the target width parameter and the target height parameter. The image width parameter designates, on a pixel basis, the width of the reconstructed image before the size change. The image height parameter designates, on a pixel basis, the height of the reconstructed image before the size change. The target width parameter designates, on a pixel basis, the width of the reconstructed image after the size change. The target height parameter designates, on a pixel basis, the height of the reconstructed image after the size change. The extension in Fig. 27 makes it possible to directly associate the item property for enlargement/reduction with the image item even if ImageSpatialExtentsProeprty is not defined as an iden derived image item. On the other hand, the item property may be associated with the image item by defining ImageSpatialExtentsProeprty as an iden derived image item.

The metadata processing unit 106 saves, in the output buffer of a RAM 103, the metadata of the group information created in step S804.

Subsequent processes in steps S805 and S806 are also executed by the metadata processing unit 106. In step S805, the metadata processing unit 106 determines whether some of the display times (periods) of the images of the slide show are the same and can be designated as a default value. If it is possible to designate the default value (YES in step S805), the process advances to step S806; otherwise (NO in step S805), the process advances to step S807. In step S806, the metadata processing unit 106 sets a parameter of the default display time (period) in the group set in step S804. More specifically, the metadata processing unit 106 sets the default display time (period) in the default_entity_duration parameter (see the description 903 in Fig. 9) of the data of the created group information (SlideshowEntityToGroupBox). Alternatively, in the case of the structure of EntityToGroupBox shown in Fig. 21, a value is set in a slide_show_timing parameter in SlideShowTimingProperty (to be described later), and is associated with the image group as an image group attribute. In step S807, the metadata processing unit 106 sets image attribute information for designating the display time (period) of each image to individually set the display time (period) of each image of the slide show. Note that if the default display time (period) is set, it is unnecessary to designate the display time (period) as each piece of image attribute information for an image for which the default display time (period) is set. The image attribute information is metadata stored in an area 1408 (ItemPropertiesBox (iprp)) of Fig. 14, as described above in the first embodiment. The image attribute information created in step S807 includes entry data stored in an area 1409 (ItemPropetyContainerBox (ipco)) of Fig. 14 and entry data stored in an area 1410 (ItemPropertyAssociationBox (ipma)) of Fig. 14. The metadata processing unit 106 creates, as entry data to be stored in ipco, data indicating the display time (period). Note that if no display time (period) is designated at the time of file creation, the property for designating the display time may not be stored or may not be associated with only an image for which no display time is designated. Alternatively, information indicating, by designating a value such as 0, that an arbitrary time (period) is designated at the time of file reproduction may be stored to associate the property.

Note that a structure that prohibits the time (period) for slide show display from being designated for each image item and can designate only one time (period) for the group may be adopted. In this case, the processes in steps S805 and S807 are unnecessary and only the processing in step S806 is performed. In this case, for the entry data stored in the area 1410 (ItemPropertyAssociationBox (ipma)), the group ID as the group identification information of SlideshowEntityToGroup may be designated directly. In this case, the ID indicating the group needs to be in the unified ID space where it can be uniquely identified from another item ID or track ID. On the other hand, if the same display time (period) is designated for each item, the same property may be applied to all the items stored in the group.

Fig. 10 shows the data format of ImageDurationProperty as attribute information for designating the image display time (period) in the slide show. ImageDurationProperty shown in Fig. 10 has a data format including an image_duration parameter of a description 1001, in which the display time (period) is set. As a unit of time set as the display time (period), sec or msec is assumed. The present invention, however, is not limited to this, and any unit that can designate the time is used. Alternatively, a relative time parameter used by the reproduction device to decide the display time (period) may be used. It is assumed that as the relative parameter, for example, a percentage or multiple of a value designated as the default display time (period) may be designated. The data format may include a parameter for designating a unit such as time_unit. This parameter for designating the unit may be configured to be effective in accordance with the value of version or flags. The designation of the parameter can designate the time unit of the image_duration parameter. As a designable value, a method capable of uniquely identifying min, sec, msec, µsec, or another time unit is possible. If the display time (period) is different for each display image, ImageDurationProperty data of different parameter values, the number of which is equal to that of display images, are stored in ipco. Then, to designate the display time (period) of each display image, entry data of ipma for associating the item ID of the display image with the created entry data of ImageProperty is created and stored. Furthermore, when displaying each image, data concerning a display position, which indicates a position in the canvas where each image is displayed, is created. For the display image with which ImageDurationProperty is associated, the display time (period) is designated preferentially over the default_entity_duration parameter of SlideshowEntityToGroupBox. In the case of SlideshowEntityToGroupBox shown in Fig. 21, the display time (period) is designated preferentially over the default display time associated with the group. Note that if no display time (period) is designated at the time of file creation, the property for designating the display time may not be stored or may not be associated with only an image for which no display time is designated. Alternatively, a property storing information indicating, by designating a value such as 0, that an arbitrary time (period) is designated at the time of file reproduction may be associated.

Fig. 23 shows the data format of SlideShowTimingProperty for designating a default image display time (period) in the slide show. SlideShowTimingProperty shown in Fig. 23 has a data format including a slide_show_timing parameter of a description 2301, in which a default display time (period) is set. As a unit of time set as the display time (period), sec or msec is assumed. The present invention, however, is not limited to this, and any unit that can designate the time is used. Alternatively, a relative time parameter used by the reproduction device to decide the display time (period) may be used. The data format may include a parameter for designating a unit such as time_unit. The parameter for designating the unit may be configured to be effective in accordance with the value of version or flags. The designation of the parameter can designate the time unit of the default_entity_duration parameter. As a designable value, a method capable of uniquely identifying min, sec, msec, µsec, or another time unit is possible. This property is preferable when designating the default image display time (period) in SlideshowEntityToGroupBox shown in Fig. 21. This item property is used to designate a duration between two continuous image items in EntityToGroupBox. This item property is a property associated with only the entity group. This property is assumed to be associated with SlideshowEntityToGroupBox but the present invention is not limited to this. That is, the property may be used for EntityToGroupBox of another type. Note that this embodiment designates the display time (period) designated in the slide_show_timing parameter. In other words, it may be interpreted that a timing obtained by multiplying, by the value of the parameter, each of the order indices of the item IDs stored in SlideshowEntityToGroupBox indicates a timing when the image of the item ID is displayed after an elapsed time from the start of the slide show. Note that if no display time (period) is designated at the time of file creation, the property for designating the display time may not be stored or may not be associated with only a group or an image for which no display time is designated. Alternatively, a property storing information indicating, by designating a value such as 0, that an arbitrary time (period) is designated at the time of file reproduction may be associated.

Note that in this embodiment, ImageDurationProperty for individually designating the display time (period) for each item and SlideShowTimingProperty for designating the default display time (period) for a group have different box structures but may have a common box structure. In this case, if the property is associated with an item, it indicates an individual display time (period), and if the property is associated with a group, it indicates a default display time (period) for the entire group. In this case, the display time (period) individually designated for each item is preferentially used. On the other hand, the property may be configured to prohibit designation for each item and to be applied to only the group, as described above. This can simplify the processing for slide show display. In addition, this can clarify the difference from a case in which images are stored as a track.

Fig. 11 shows the data format of attribute information ImageLocationProperty for designating arrangement information of an image. ImageLocationProperty shown in Fig. 11 includes an alignment_position parameter 1101 representing a relative position with respect to the canvas when version is 1 in the box identified by imlo. This alignment_position parameter is decided by a value that designates the position with respect to the canvas. If the alignment_position parameter is 0, a display image is displayed so that the top left of the canvas is aligned with the canvas. That is, the display image is displayed by aligning the top left of the display image with that of the canvas. At this time, if the display image is smaller, a color decided by a canvas_fill_value parameter designated in SlideshowEntityToGroupBox is displayed. If the display image is larger, only an image portion of a range falling within the canvas is displayed. In this embodiment, the image is displayed in this way but a display method of enlarging/reducing the image may be used. Similarly, if the alignment_position parameter is 1, the image is displayed by aligning the top center of the image with that of the canvas. If the alignment_position parameter is 2, the image is displayed by aligning the top right of the image with that of the canvas. If the alignment_position parameter is 3, the image is displayed by aligning the middle left of the image with that of the canvas. If the alignment_position parameter is 4, the image is displayed by aligning the middle center of the image with that of the canvas. If the alignment_position parameter is 5, the image is displayed by aligning the middle right of the image with that of the canvas. If the alignment_position parameter is 6, the image is displayed by aligning the bottom left of the image with that of the canvas. If the alignment_position parameter is 7, the image is displayed by aligning the bottom center of the image with that of the canvas. If the alignment_position parameter is 8, the image is displayed by aligning the bottom right of the image with that of the canvas. Note that a value of 9 or more of the alignment_position parameter is a reserved value. Note that in this embodiment, the alignment_position parameter is represented by a numerical value but may be represented by assigning bits. If, for example, all bits are 0, the display image is displayed so that the top left of the canvas is aligned with the canvas. If only the first bit is 1, the image is displayed by aligning the top center of the image with that of the canvas. If only the second bit is 2, the image is displayed by aligning the top right of the image with that of the canvas. Such definition may be performed. In this case, assume that setting a plurality of bits to 1 is prohibited.

If version is not 1, a position is designated by the offset values of the horizontal_offset parameter and the vertical_offset parameter with reference to the top left of the canvas (a description 1102). Note that if 0 is designated for each offset value, the setting is equivalent to designation of the top left of the image when version is 1. A pixel position having a negative offset value is not included. Note that a pixel position in the horizontal direction more than the output width parameter designated in SlideshowEntityToGroupBox should not be designated. Similarly, a pixel position in the vertical direction more than the output height parameter designated in SlideshowEntityToGroupBox should not be designated. In this embodiment, ImageLocationProperty is used to designate a display position with respect to the canvas at the time of slide show display but can be used for another application. For example, the image is normally displayed in a designated image size so that the image is displayed at the center of the monitor when performing full-screen display on a monitor (arbitrary screen). However, if the image attribute information is designated, ImageLocationProperty may be used to designate the position of the monitor screen on which the image is displayed. Furthermore, in this embodiment, the image attribute information for designating the display position is added. However, image attribute information for performing designation to enlarge/reduce an image and display it may be designated, as described above.

ImageLocationProperty is formed using an item property to decide the image position on the canvas. On the other hand, an ImageOverlay derived image shown in Fig. 22 may be used. In the current structure of the ImageOverlay derived image defined in ISO/IEC23008-12 (Part 12), it is possible to align an image by indicating a pixel position but it is impossible to perform alignment by a defined value indicating a relative position with respect to the canvas, as indicated in ImageLocationProperty of Fig. 11. To cope with this, by replacing with the structure shown in Fig. 22, the above-described relative alignment becomes possible. An item whose item_type value is "iovl" defines a derived image item by overlaying one or more input images in a designated layer order in a large canvas. In SingleItemTypeReferenceBox of the derived image item whose type in ItemReferenceBox is dimg, a list of input images is displayed in such layer order that the bottom input image is displayed first and the top input image is displayed last. If version is 0, the position is represented by a pixel position from the top left corner of the canvas. A horizontal_offset parameter and a vertical_offset parameter (a description 2202) in Fig. 22 store pixel offset information from the top left corner, as already defined. If version is 1, information indicating a predefined relative position with respect to the canvas is defined. An alignment_position parameter (a description 2201) of Fig. 22 is the same parameter as the alignment_position parameter in ImageLocationProperty shown in Fig. 11. By storing the item ID of ImageOverlay as an entity of SlideshowEntityToGroup, it is possible to designate a canvas even in the case of SlideshowEntityToGroup shown in Fig. 21.

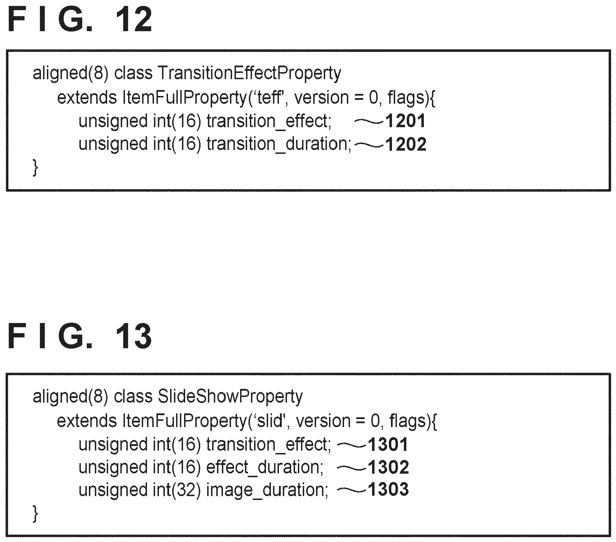

Next, the metadata processing unit 106 creates image attribute information for designating an image switching (transition) effect at the time of slide show display, as designation of other image attribute information. Fig. 12 shows the data format of attribute information TransitionEffectProperty for designating the switching (transition) effect in the slide show. The data format of TransitionEffectProperty shown in Fig. 24 is obtained by allowing designation of version in the data format shown in Fig. 12. In the case of the format shown in Fig. 24, a transition_duration parameter (to be described later) can be designated when version is 1. If version is 0, a predefined default value is used for the transition_duration parameter. In another form, an item property without the transition_duration parameter may be formed. This property defines the switching (transition) effect applied between display operations of two continuous items in EntityToGroupBox. This property can be associated an item or an entity group. If the same images are stored in one or a different slide show group, and a different switching (transition) effect is applied, a method that uses an identity (iden) derived image item defined as derived image is considered. There is also considered a method of assigning different item_id values to the same image data. In this case, it is possible to designate different item_id values for the same image data by performing such designation that two or more image items with different item id values designated in itemInformationBox (iinf) have the same offset and size in ItemLocationBox (iloc). Furthermore, a structure that can perform designation by newly defining a box by extending ItemPropertyAssociationBox is considered. These designation methods can be used not only for designation of an item property in the slide show but also for designation of other item properties. TransitionEffectProperty shown in Fig. 12 or 24 is formed from a transition_effect parameter (a description 1201 or 2401) for designating the switching (transition) effect and a transition_duration parameter (a description 1202 or 2402) indicating the time (period) of the switching (transition) effect. The transition_effect parameter is a parameter for designating the effect at the time of image display by a designated value. For example, if 0 is designated for the transition_effect parameter, a cut switching (transition) effect is performed. If the transition_effect parameter is 1, a fade switching (transition) effect is performed. If the transition_effect parameter is 2, a wipe switching (transition) effect is performed. If the transition_effect parameter is 3, a split switching (transition) effect is performed. In this way, a value for identifying an effect decided in advance is designated. In addition, if the transition_effect parameter is 4, a dissolve-in switching (transition) effect is performed. If the transition_effect parameter is 5, a zoom switching (transition) effect is performed. In this way, a value for identifying an effect decided in advance is designated. Other values may be undefined, and a definition may be added to identify an effect decided in advance. The transision_duration parameter is used to designate the time (period) during which the switching (transition) effect designated by the transition_effect parameter is performed. As a unit of time set as the time of the switching (transition) effect, sec or msec is assumed. The present invention, however, is not limited to this, and any unit that can designate the time is used. Alternatively, a relative time parameter used by the reproduction device to decide the display time (period) may be used. As the relative time parameter, for example, a time (period) of a designated percentage or multiple of the display time (period) designated for each item can be designated.

The data format may include a parameter for designating a unit such as time_unit. The parameter for designating the unit may be configured to be effective in accordance with the value of version or flags. The designation of the parameter can designate the time unit of the default_entity_duration parameter. As a designable value, a method capable of uniquely identifying min, sec, msec, µsec, or another time unit is possible. It may be configured to switch an arbitrary time unit or designation of a percentage or multiple by the parameter. The time designated by the parameter is assumed to be designated as a time not included in the time of the duration parameter (description 903) of Fig. 9, the image_duration parameter (description 1001) of Fig. 10, and the slide_show_timing (a description 2301) of Fig. 23. The present invention, however, is not limited to this.

In this case, the time taken for overall display at the time of slide show display is the total of the display times (periods) designated for the individual items or the group and the times taken to perform the switching (transition) effects of the property designated for the individual items or the group. For example, if SlideShowTimingProperty shown in Fig. 23 is applied to only the group and TransitionEffectProperty is applied to only the group, the time is the time (period) obtained by adding a value obtained by multiplying the value of the slide_show_timing parameter of SlideShowTimingProperty by the number of items included in the group and a value obtained by multiplying the value of the transition_duration value by the number of items included in the group.

Alternatively, if the time is included in these times, the time for overall display is the total of display times (periods) designated for the individual items or the group. At this time, a time (period) shorter than each display time (period) should be designated. However, if a larger value is designated, the switching (transition) effect need not be performed, or may be performed in accordance with image display. Alternatively, during the effect of image display, the switching effect to the next image may be performed. On the other hand, if a time (period) of the designated percentage is designated as the relative time parameter, it is unnecessary to consider the magnitude relationship with the display time (period) of each image. Note that in this embodiment, the data format is formed by the two parameters, but each parameter may be defined as different image attribute information. Furthermore, this embodiment assumes that the effect when displaying the image item to which the image attribute information is applied is designated but an effect when ending display of the image can additionally be designated. At this time, the effect when ending display of the image and the effect when displaying the next image may be separately designated or only one of the effects may be designated as a restriction. Furthermore, if the transition_duration parameter of the property is included in the display time (period) of each image item, a case in which the transition_duration parameter is included in only the display time (period) of the first image out of the display times (periods) of the two continuous images is considered. It is also possible to symmetrically include 50% of the value of the transition_duration parameter in each of the display times (periods) of the two continuous images. Alternatively, a parameter such as a cross_item_effect_ratio parameter may be defined in the data format, and may be used to designate a percentage or time of each of the first and second images to be included. In this case, if the designated value is in percentage, it is necessary to designate the value equal to or less than 100%. The time of the designated percentage is included in the display time (period) of the first image, and the time (period) of 100 - designated percentage is included in the display time (period) of the second image. Note that if the cross_item_effect_ratio parameter is defined, it may be configured to be effective in accordance with designation of version, flags, or the like. If no value is designated, a time of a predesignated percentage such as 50% as a default value can be included in the display time (period) of each image.

A parameter may be defined in the item property in each switching (transition) effect, thereby designating the operation of the switching (transition) effect. TransitionEffectProperty shown in Fig. 28 is a property that can designate the operation of the switching (transition) effect in the item property. TransitionEffectProperty is formed from a transition_effect parameter (a description 2801) for designating the switching (transition) effect and a transition_direction parameter (a description 2802) indicating a switching (transition) direction. This property defines the switching (transition) effect applied between display operations of two continuous items in EntityToGroupBox, similar to Fig. 12 or 24. This property can be associated with an item or an entity group, and can designate a different switching (transition) effect for one image by the same method as in Fig. 12 or 24. If (flags&1) is equal to 1, a recommended switching (transition) direction applied in accordance with the switching (transition) effect designated by the transition_effect parameter (the description 2801) is designated by the transition_direction parameter (the description 2802). If (flags& 1) is not equal to 1, this parameter is not applied. Note that this parameter may be defined as a designable arbitrary parameter applied in accordance with the switching (transition) effect regardless of the switching (transition) direction.

The transition_effect parameter (the description 2801) is a parameter for designating the effect at the time of image display by a designated value. For example, if 0 is designated for the transition_effect parameter, a cut switching (transition) effect is performed. In this case, even if the transition_direction parameter (the description 2802) is designated, it is ignored. If the transition_effect parameter is 1, a fade or fade-in switching (transition) effect is performed. If the transition_effect parameter is 2, a dissolve switching (transition) effect is performed. In these cases, the value of the transition_direction parameter is similarly ignored. If the transition_effect parameter is 3, a wipe switching (transition) effect is performed, and only values of 6 to 13 (to be described later) each designated by the transition_direction parameter are identified as effective values. If the transition_effect parameter is 4, a split switching (transition) effect is performed, and only values of 2 to 5 (to be described later) each designated by the transition_direction parameter are identified as effective values. If the transition_effect parameter is 5, a zoom switching (transition) effect is performed, and only values of 0 to 1 (to be described later) each designated by the transition_direction parameter are identified as effective values. If the transition_effect parameter is 6, a push switching (transition) effect is performed, and only values of 6 to 13 (to be described later) each designated by the transition_direction parameter are identified as effective values. In this way, a value for designating an effect decided in advance is designated. Other values may be undefined, and a definition may be added to identify an effect decided in advance. The transition_direction parameter of the description 2802 is a parameter indicating the switching (transition) direction to be applied, and designates one of the following values. That is, in for 0, out for 1, horizontal-in for 2, horizontal-out for 3, vertical-in for 4, vertical-out for 5, from-left for 6, from-right for 7, from-top for 8, from-bottom for 9, from-left-top for 10, from-right-top for 11, from-left-bottom for 12, and from-right-bottom for 13 are defined. Other values are undefined. The transition_direction value is ignored if it falls outside a range allowed for the transition_effect parameter.

The switching (transition) effect is designated by a combination of the transition_effect parameter and the transition_direction parameter. For example, if the wipe effect of 3 is designated for the transition_effect parameter, one of values of 6 to 13 can be designated for the transition_direction parameter. If the designated value is 6, a wipe operation from the left is designated. In addition, for the wipe effect, an operation from the right, top, bottom, top left, top right, bottom left, or bottom right can be designated. The same applied to the remaining switching (transition) effects. A parameter for designating a detailed operation according to each switching (transition) effect may be defined and designated in the item property.

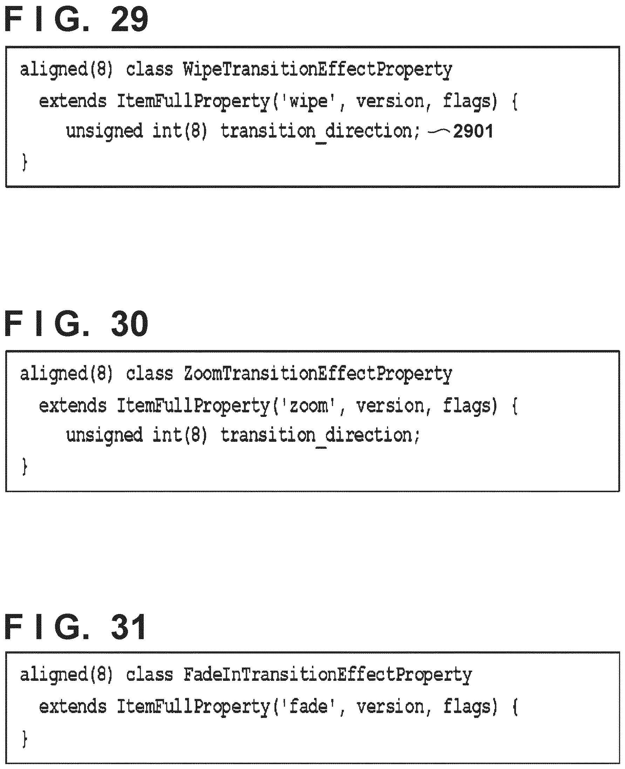

In this embodiment, the transition_effect parameter (the description 1201, 2401, or 2801) is used to designate the type of switching (transition) effect. However, the item property of each switching (transition) effect may be represented as another item property using 4CC for each switching (transition) effect. Each of Figs. 29, 30, and 31 shows an example. WipeTransitionEffectProperty shown in Fig. 29 is a property indicating the wipe switching (transition) effect applied between display operations of two continuous items of an entity group. An effect of outputting the next image by wiping from the first image to the second image is described. This item property is associated with the first one of the two continuous items. For a transition_direction parameter of a description 2901, one of the following values is designated. As the switching (transition) direction, from-left for 0, from-right for 1, from-top for 2, from-bottom for 3, from-left-top for 4, from-right-top for 5, from-left-bottom for 6, or from-right-bottom for 7 is applied. Other values are undefined. Note that whether to make the parameter effective may be switched using flags or the like.

ZoomTransitionEffectProperty shown in Fig. 30 is a property indicating the zoom switching (transition) effect applied between display operations of two continuous items of an entity group. An effect of outputting the next image by zooming in or out from the first image to the second image is described. This item property is associated with the first one of the two continuous items. A transition_direction parameter of a description 3001 designates one of the following values. As the switching (transition) direction, in for 1 or out for 2 is applied. Other values are undefined. Note that whether to make the parameter effective may be switched using flags or the like.

FadeInTransitionEffectProperty shown in Fig. 31 is a property indicating the fade-in switching (transition) effect applied between display operations of two continuous items of an entity group. An effect of outputting the next image by fading in from the first image to the second image is described. This item property is associated with the first one of the two continuous items. Since there is no designable switching (transition) direction in this property, no parameter is held.

In addition, it is considered that DissolveTransitionEffectItemProperty for performing the dissolve (a smooth stepwise transition from the first image to the second image) switching (transition) effect may be defined. A different item property can similarly be defined for each of the remaining switching (transition) effects. It is possible to define cutTransitionEffectItemProperty as the cut (an instantaneous transition from the first image to the second image) effect, splitTransitionEffectItemProperty as the split (a transition to the second image by vertically or horizontally splitting the image) effect, and pushTransitionEffectITemProperty as the push (a transition by pushing the first image by the second image) effect. If there is a designable transition_direction parameter for each of these effects, a corresponding parameter is defined as a designable value.

In the transition_effect parameter (the description 1201, 2401, or 2801), a new item property can also be defined with respect to a switching (transition) effect of a preserved value as an undefined value. This property can be individually designated for an image item or group. On the other hand, if an individual item property is defined, it is necessary to associate, with an item, an item property intended to perform at most one of the switching (transition) effects. That is, a restriction that only the item property of at most one of the switching (transition) effects can be associated is defined. On the other hand, a plurality of switching (transition) effects can be applied and a switching (transition) effect obtained by mixing them can be represented. Furthermore, a switching (transition) effect may be defined by the user using uuid or the like. If a switching (transition) effect is defined using uuid, it is necessary to support it on the file generation side and the file reproduction side.

Note that TransitionEffectProperty shown in Fig. 12, 24, or 28 is associated after other descriptive item properties and transformative item properties.

ImageDurationProperty of Fig. 10 or SlideShowTimingProperty of Fig. 23 and TransitionEffectProperty of Fig. 12 or 24 may be summarized as one piece of image attribute information. Fig. 13 shows the data format of SlideShowProperty as the image attribute information obtaining by summarizing ImageDurationProperty of Fig. 10 and TransitionEffectProperty of Fig. 12. In the case of the structure shown in Fig. 13, it is possible to collectively designate image attribute information concerning the slide show. Similarly, one piece of image attribute information may be obtained by combining image attribute information indicating the display time (period) and image attribute information indicating the switching (transition) effect. These pieces of image attribute information may be applied to the image group.

The metadata of the image attribute information created in step S807 is saved in the output buffer of a RAM 203. Then, after the processing in step S806 or S807, the process advances to step S808, thereby ending the metadata processing sequence of the slide show.

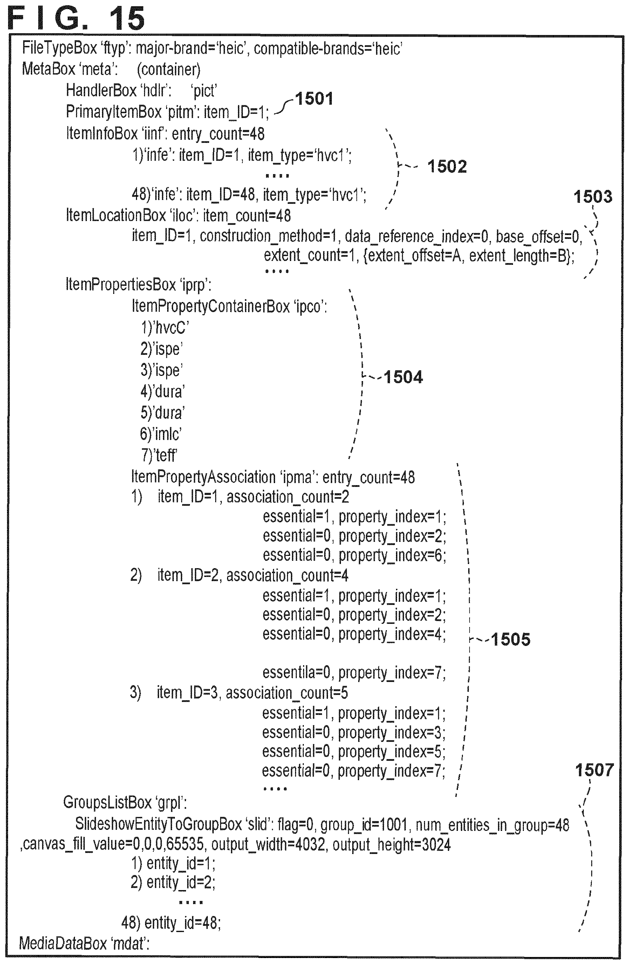

Fig. 15 is a view showing an example of a HEIF file output according to this embodiment. In PrimaryItemBox (pitm) indicated by a description 1501 in Fig. 15, 1 is stored as item_ID. Note that PrimaryItemBox may be extended to designate, as an ID designated in this box, a group ID for identifying SlideshowEntityToGroup described above. In this case, 1001 as group_id (to be described later) is designated as the ID. ItemInfoBox indicated by a description 1502 allows each image item to be identified by item_ID, and indicates the type of the image item identified by item_ID. An image item with item_ID of 1 is "hvc1", which indicates an HEVC encoded image. Similarly, all image items up to an image item with item ID of 48 are stored as HEVC encoded images. ItemLocationBox indicated by a description 1503 indicates the storage position of each image data bit stream in the file. It is possible to specify a position at which data of each image exists in MediaDataBox. A description 1504 indicates ItemPropertyContainerBox in ItemProperiesBox, and stores ItemProperty indicating attribute information of the image. "hvcC" indicates an HEVC encoding parameter. "ispe" is attribute information indicating the size of the image. "dura" is ImageDurationPropertyBox described above. "imlo" is ImageLocationPropertyBox. "teff" is TransitionEffectPropertyBox. ItemPropertyAssociationBox 1505 indicates association between each image item and attribute information. Each image item is sequentially associated with the attribute information in "ipco". For example, common ispe is associated with item_ID of 1 and item_ID of 2, which indicates a common image size. On the other hand, different "ispe" is applied to item ID of 3, which indicates a different image size. Furthermore, since dura is not associated with item ID of 1, the default display duration is applied. Different display periods are applied to item ID of 2 and item_ID of 3. A description 1507 indicates SlideshowEntityToGroupBox. 1001 is designated as group_id, 48 is designated as the number of entries of the group, opaque black is designated as a canvas fill value, and a width of 4032 and a height of 3024 are designated as the sizes of the canvas. 1 and 2 to 48 are designated as item IDs of the respective images in entity id in the slide show display order. This stores information for slide show display.

As described above, if the metadata creation processing of the slide show described in this embodiment is performed, a created HEIF image file has the internal structure shown in Fig. 14. Note that in the first embodiment, the derived image of the slide show is described. Therefore, the area 606 (ItemInfoBox (iinf)) of Fig. 6 stores an entry having the item ID of the derived image. However, in this embodiment, it is apparent that an area 1406 (iinf) of Fig. 14 includes no entry indicating the derived image of the slide show. In the first embodiment, the item reference information and the image attribute information of the derived image of the slide show are created and stored, as entry data, in the area 607 (ItemReferenceBox (iref)) and the area 608 (ItemProptiesBox (iprp)) of Fig. 6, respectively. However, in this embodiment, it is apparent that no entries concerning the derived image of the slide show are included in an area 1407 (iref) and the area 1408 (iprp) of Fig. 14.

In this embodiment, a method of grouping, in the above structure, images to be displayed in the slide show, and applying attribute information of each image at the time of slide show display to each image is used. However, any method of grouping images and holding an associated attribute as a property or a parameter of the group may be used.

According to this embodiment, by grouping images for slide show display, it is possible to readily identify and store images intended for slide show display among a plurality of images stored in a HEIF file. By storing information concerning a canvas as a parameter of the group, a size at the time of slide show display can be unified and handled. By holding information concerning a display time (period) as a parameter of the group, attribute information of the group, or attribute information for each image, it is possible to arbitrarily designate a time for slide show display. By holding canvas position information at the time of image display as image attribute information or a parameter of a grouped derived image, it is possible to designate a display position. Furthermore, by making it possible to designate, as image attribute information, an image switching (transition) effect at the time of slide show display, more flexible slide show is possible. By designating, as an image stored in SlideshowEntityToGroupBox, an identity (iden) defined as a derived image, a grid (grid) image, or an overlay (iovl) image, the derived image can be displayed as a slide show. It is also possible to store a plurality of boxes of SlideshowEntityToGroupBox in one file using different group IDs, and store a plurality of slide show representations in one file.

### [Third Embodiment]

An image file creation apparatus according to the third embodiment has the same arrangement as that described with reference to Fig. 1 in the first embodiment. The sequence of the image file creation processing shown in Fig. 2 and the slide show reproduction sequence shown in Fig. 20 can be similarly applied to this embodiment. However, in this embodiment, metadata creation processing (S212) of a slide show in Fig. 2 and processing (S213) of setting main image item information are different from the first embodiment. Therefore, this embodiment will mainly describe the processes in steps S212 and S213 with reference to Figs. 16, 17, 18, and 19.

Fig. 16 is a view showing the data format of PrimaryItemBox (pitm) in the HEIF standard. In this embodiment, a data format obtained by extending the specification of pitm shown in Fig. 16 is used. Fig. 17 shows an example of the data format of Primary ItemBox, obtained by extending the specification of pitm. This extension intends to make it possible to designate one or more image items as main image item information. In the processing of step S212, a metadata processing unit 106 selects images to be displayed in a slide show, and creates a list of item IDs in a display order. Then, a list of item IDs for designating, as a main image item or items, one or more item IDs to be displayed in the slide show is created. In step S213, the metadata processing unit 106 stores the image item IDs in a portion of a description 1701 or 1702 in Fig. 17 in the order of the list based on the list of item IDs created in step S212, and sets the number of stored item IDs in an item_count parameter. This designates one or more images as a main image item or items for a HEIF file to be created. In this embodiment, in step S212, the metadata processing unit 106 creates image attribute information for designating the display time (period) of each image of the slide show to individually set the display time(period) of each image. This processing of setting the image attribute information is the same as the processing in step S807 of Fig. 8 explained in the above-described second embodiment, and the metadata processing unit 106 creates metadata of ItemPropertiesBox (iprp) and saves it in a RAM 203. As another method, only one box of Primary ItemBox can currently be designated in the HEIF standard but a method of allowing designation of a plurality of boxes of Primary ItemBox and storing them in the display order in the slide show may be used.

Fig. 18 shows another example of the data format of PrimaryItemBox, obtained by extending the specification of pitm. In the data format shown in Fig. 18, it is possible to designate group id of SlideshowEntityToGroupBox described in the second embodiment in PrimariItemBox (a description 1801).

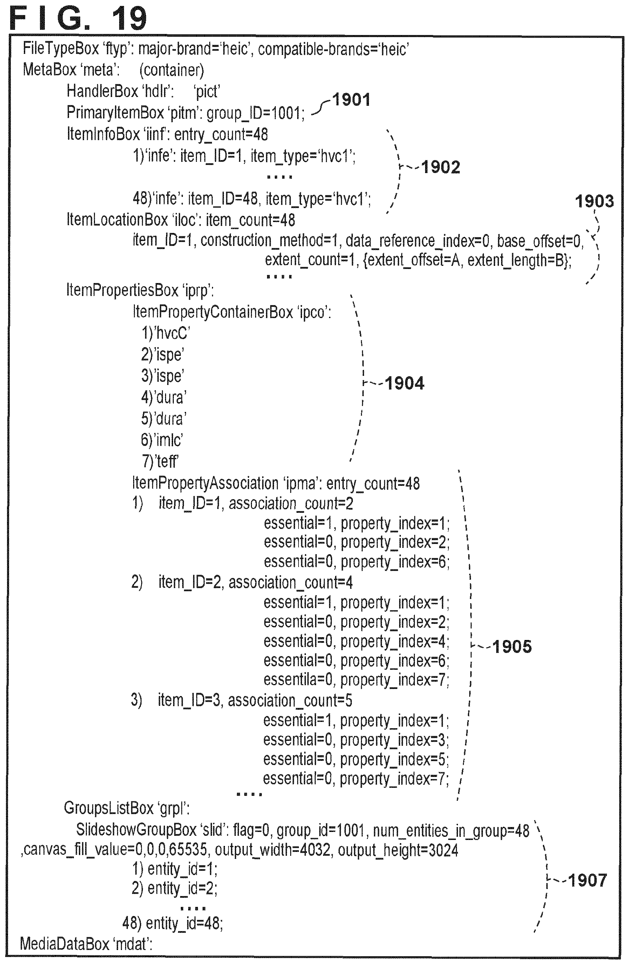

Fig. 19 shows an example of the HEIF file output according to this embodiment. Fig. 19 shows an example of a file in which group_id can be designated. Referring to Fig. 19, group_id 1001 designated in SlideshowEntityToGroupBox (a description 1507) is designated in PrimariItemBox (pitm) indicated by a description 1901. Descriptions 1902 to 1907 in Fig. 19 are the same as the descriptions 1502 to 1507 in Fig. 15 described in the second embodiment.

As described above, according to this embodiment, by designating images for slide show display in extended PrimaryItemBox, it is possible to readily identify and store images intended for slide show display among a plurality of images stored in the HEIF file. By making it possible to designate, in PrimaryItemBox, a group ID obtained by grouping in EntityToGroupBox, it is possible to process a plurality of images as a top priority image group. By holding information concerning the display time (period) as a parameter of the group or attribute information for each image, it is possible to arbitrarily designate a time for slide show display. By holding, as image attribute information, canvas position information at the time of image display, it is possible to designate a display position. Furthermore, by making it possible to designate, as image attribute information, an image switching (transition) effect at the time of slide show display, more flexible slide show display is possible. Note that in this embodiment, file storage intended for a slide show is enabled by extending PrimaryItemBox. However, any different extension method may be used as long as it is possible to store a slide show.

Each embodiment has explained an embodiment of the image file creation processing and the metadata creation processing of a slide show stored in an image file. The HEIF image file created in each embodiment has a structure in which ftyp, meta, and mdat (the metadata storage area 602 (MetaBox (meta)) and the encoded data storage area 611 (MediaDataBox (mdat)) of Fig. 6) are arranged in the uppermost layer, as shown in Fig. 6 or 14. However, the HEIF file created by the image file creation apparatus is not limited to this internal structure. For example, any one of the above-described embodiments may be performed, thereby making it possible to also store moving image data and create a HEIF file by metadata of MovieBox (moov).

In HEIF, a HEIF file including an image sequence as temporally continuous still images needs to define the continuous still images as a video track in itself so that an application for displaying images can perform continuous display processing. As a file structure, metadata of moov can be required in addition to meta. In each of the above-described embodiments, a HEIF file including information of a slide show of a plurality of image data in meta is created. That is, in creation of an image file including settings of a slide show, in which the user selects a plurality of arbitrary images and decides an arbitrary order and display time (period), it is possible to more efficiently create a HEIF file, as compared with generation of a HEIF file storing an image sequence.

Furthermore, in each of the above-described embodiments, HEIF has been exemplified as a file format. However, such file that one file can store a plurality of image files and can hold metadata concerning the image files may be applied to other formats.

### (Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

In the description of each of the above embodiments, the example in which the processing (Fig. 2 or the like) of creating an image file and the processing (Fig. 20 or the like) of reproducing the created image file are executed by the same apparatus, that is, the image file creation apparatus 100 has been explained but these processes may be executed by different apparatuses. That is, an image file reproduction apparatus that has received, by wired or wireless communication, an image file created by the image file creation apparatus 100 may analyze the received image file and execute the processing of Fig. 20, thereby reproducing the image file.

The present invention is not limited to the above embodiments and various changes and modifications can be made within the spirit and scope of the present invention. Therefore, to apprise the public of the scope of the present invention, the following claims are made.

This application claims priority from Japanese Patent Application Nos. 2019-123136 filed July 1, 2019, 2019-180721 filed September 30, 2019, and 2020-000990 filed January 7, 2020, which are hereby incorporated by reference herein.

## Claims

1. An image file creation apparatus for creating an image file according to a predetermined image file format of a structure including an image data area that stores images and a metadata area that stores metadata as information concerning the images, **characterized by** comprising:
decision means for deciding a plurality of images to be continuously displayed, from the images stored in the image data area; and
metadata processing means for creating identification information for each of the plurality of images and information of a position in the image data area where the image corresponding to the identification information is stored and storing the created information in the metadata area, and also storing, in the metadata area, information indicating a display order of the plurality of images and information indicating a display time of each of the plurality of images.

2. The image file creation apparatus according to claim 1, **characterized in that** the metadata processing means sets a derived image that refers to the plurality of images, creates, as description information of the derived image, the information indicating the display order of the plurality of images, and stores the created information in the metadata area.

3. The image file creation apparatus according to claim 2, **characterized in that** the metadata processing means creates, as attribute information of the derived image, information for associating the identification information with attribute information of the image corresponding to the identification information, and stores the created information in the metadata area.

4. The image file creation apparatus according to claim 1, **characterized in that** the metadata processing means creates information for grouping the plurality of images, and stores, in the metadata area, the information for grouping which includes the information indicating the display order of the plurality of images and the information indicating the display time of each of the plurality of images.

5. The image file creation apparatus according to claim 1, **characterized in that** the metadata processing means
creates information for grouping the plurality of images and stores, in the metadata area, the information for grouping which includes the information indicating the display order of the plurality of images, and
creates, as attribute information of the image corresponding to the identification information, information for associating the identification information with the attribute information of the image, and stores, in the metadata area, the created information including the information indicating the display time of each of the plurality of images.

6. The image file creation apparatus according to claim 1, **characterized in that** the metadata processing means
creates information for grouping the plurality of images, and stores, in the metadata area, the information for grouping which includes the information indicating the display order of the plurality of images, and
creates, as attribute information of a group of the plurality of images obtained by the grouping, information for associating identification information of the group with attribute information of the group corresponding to the identification information of the group, and stores, in the metadata area, the created information including the information indicating the display time of each of the plurality of images.

7. The image file creation apparatus according to any one of claims 1 to 6, **characterized in that** the image file format is HEIF (High Efficiency Image File Format).

8. The image file creation apparatus according to claim 7, **characterized in that** the metadata processing means designates information for designating the plurality of images in an area (PrimaryItemBox) where a main image item is designated in the metadata area.

9. The image file creation apparatus according to claim 8, **characterized in that** the information for designating the plurality of images is group identification information for identifying the group of the plurality of images.

10. The image file creation apparatus according to any one of claims 1 to 9, **characterized in that** the metadata processing means stores, in the metadata area, information concerning an image area when displaying the plurality of images.

11. The image file creation apparatus according to any one of claims 1 to 10, **characterized in that** the metadata processing means stores, in the metadata area, information of an effect at the time of image switching when displaying the plurality of images.

12. The image file creation apparatus according to any one of claims 1 to 11, **characterized in that** the metadata processing means stores, in the metadata area, information of a display position of each image when displaying the plurality of images.

13. The image file creation apparatus according to any one of claims 1 to 12, **characterized by** further comprising setting means for setting, based on a user operation, the information indicating the display order of the plurality of images and the information indicating the display time of each of the plurality of images.

14. An image file creation method of creating an image file according to a predetermined image file format of a structure including an image data area that stores images and a metadata area that stores metadata as information concerning the images, **characterized by** comprising:
deciding a plurality of images to be continuously displayed, from the images stored in the image data area; and
creating identification information for each of the plurality of images and information of a position in the image data area where the image corresponding to the identification information is stored and storing the created information in the metadata area, and also storing, in the metadata area, information indicating a display order of the plurality of images and information indicating a display time of each of the plurality of images.

15. A program for causing a computer to function as an image file creation apparatus defined in any one of claims 1 to 13.
